# EUROPÄISCHE PATENTSCHRIFT

(11) **EP 3 452 941 B1**
(45) Veröffentlichungstag und Bekanntmachung des Hinweises auf die Patenterteilung: **15.07.2020**
(21) Anmeldenummer: 17791584.0
(22) Anmeldetag: 04.10.2017
(51) Int. Cl.: G06F 21/10, G06F 21/64

(54) **VERFAHREN ZUR ELEKTRONISCHEN DOKUMENTATION VON LIZENZINFORMATIONEN**
METHOD FOR ELECTRONICALLY DOCUMENTING LICENSE INFORMATION
PROCÉDÉ DE DOCUMENTATION ÉLECTRONIQUE D'INFORMATIONS DE LICENCE

(30) Priorität: 04.10.2016 DE 102016118724
(43) Veröffentlichungstag der Anmeldung: 13.03.2019
(73) Patentinhaber: Prostep AG, 64293 Darmstadt (DE)
(72) Erfinder: HOLLAND, Martin, 30657 Hannover (DE); LOTTER, Nobert, 64668 Rimbach (DE)
(74) Vertreter: Habermann Intellectual Property Partnerschaft von Patentanwälten mbB
(86) Internationale Anmeldenummer: PCT/EP2017/075135
(87) Internationale Veröffentlichungsnummer: WO 2018/065441

(56) Entgegenhaltungen:
- EP-A2- 1 923 814
- US-A1- 2011 197 078
- US-A1- 2015 278 820
- US-A1- 2016 275 461
- Melanie Swan: "Blockchain: Blueprint for a New Economy" In: "Blockchain: Blueprint for a New Economy", 8. Februar 2015 (2015-02-08), O'Reilly, XP055279098, ISBN: 978-1-4919-2049-7 Seiten 37-41

## Beschreibung

Die Erfindung betrifft ein Verfahren zur elektronischen Dokumentation von Lizenzinformationen über eine Vergabe einer Lizenz und über eine Inanspruchnahme dieser Lizenz in einem Netzwerk mehrerer datenübertragend miteinander verbindbarer elektronischer Datenverarbeitungseinrichtungen.

Die Vergabe einer Lizenz wird zwischen einem Lizenzgeber und einem Lizenznehmer vereinbart. Diese Vereinbarung wird üblicherweise sowohl von dem Lizenzgeber als auch von dem Lizenznehmer dokumentiert und gegebenenfalls in einer von dem Lizenzgeber oder von dem Lizenznehmer verwalteten Datenbank in einer elektronischen Datenverarbeitungseinrichtung dokumentiert, beziehungsweise hinterlegt. Bei Bedarf können der Lizenzgeber und der Lizenznehmer auf die jeweils eigene Dokumentation zu der Vereinbarung über die vergebene Lizenz zurückgreifen. Falls der Lizenzgeber oder der Lizenznehmer aus anderen Gründen auf die Dokumentation des jeweils anderen zugreifen will, müssen Aspekte der Sicherheit und der Vertraulichkeit bei dem Zugriff auf die Dokumentation beachtet werden.

Die Verwaltung von elektronischen Dokumentationen von Lizenzinformationen setzt regelmäßig voraus, dass diese Lizenzinformationen von einer vertrauenswürdigen Instanz verwaltet werden. Üblicherweise verwaltet der Lizenzgeber die für ihn relevanten Lizenzinformationen über die Vergabe einer Lizenz, während der Lizenznehmer die für ihn relevanten Informationen über die Inanspruchnahme dieser Lizenz verwaltet. Nach Ablauf eines vereinbarten Zeitraums muss der Lizenznehmer dem Lizenzgeber üblicherweise Lizenzinformationen über die bereits erfolgte Inanspruchnahme der Lizenz vorlegen. Diese Informationen werden sowohl der Lizenznehmer als auch der Lizenzgeber unabhängig voneinander archivieren, um bei Bedarf darauf zurückgreifen zu können. Eine unabhängige Überprüfung der jeweiligen Lizenzinformationen ist in vielen Fällen weder vorgesehen noch praktikabel.

Typischerweise wird bei einer Vereinbarung über die Vergabe einer Lizenz geregelt, dass der Lizenznehmer seine Inanspruchnahme der Lizenz dokumentiert und in zeitlichen Abständen dem Lizenzgeber den Umfang der Inanspruchnahme der Lizenz mitteilt und belegt. Der Umfang der Inanspruchnahme der Lizenz ist in vielen Fällen auch die Grundlage für die Ermittlung der Lizenzgebühren. Der Lizenzgeber muss dabei entweder der von dem Lizenznehmer vorgelegten Dokumentation vertrauen oder eine Überprüfung dieser Dokumentation veranlassen.

Um den Verwaltungsaufwand für eine derartige Lizenzvereinbarung möglichst gering zu halten, werden oftmals Zeiträume von einem Quartal oder einem Kalenderjahr vereinbart, innerhalb dessen der Lizenznehmer die Informationen über die Inanspruchnahme der Lizenz sammelt, um sie nach Ablauf der vorgegebenen Zeitdauer dem Lizenzgeber zur Verfügung zu stellen. Eine zeitnahe und beispielsweise tagesaktuelle Information des Lizenzgebers über die bis zu diesem Zeitpunkt bereits erfolgte Inanspruchnahme der von ihm vergebenen Lizenz ist kaum möglich und jedenfalls mit einem hohen und oftmals unverhältnismäßig großen Verwaltungsaufwand sowohl für den Lizenznehmer als auch den Lizenzgeber verbunden. Diese Informationen müssen zudem möglichst vertraulich zwischen dem Lizenznehmer und dem Lizenzgeber ausgetauscht werden, damit Dritte keine vertraulichen und nicht für die Öffentlichkeit bestimmten Informationen über den Umfang der Lizenzvergabe, über die an der Lizenzvergabe beteiligten Parteien und über die bereits erfolgte Inanspruchnahme der Lizenz erhalten.

Für einen Kunden, der ein lizenzgemäßes Produkt erwerben will oder erwirbt, ist es regelmäßig kaum nachvollziehbar oder überprüfbar, ob das betreffende Produkt im Rahmen einer gültigen Inanspruchnahme der Lizenz hergestellt wurde. Um die Rechtmäßigkeit des betreffenden Produkts überprüfen zu können, muss sich der Kunde entweder an den Lizenznehmer oder den Lizenzgeber wenden und den ihm auf Nachfrage übermittelten Lizenzinformationen vertrauen. Eine derartige Überprüfung, ob ein Produkt durch eine gültige Inanspruchnahme einer Lizenz rechtmäßig hergestellt wurde, setzt jedoch voraus, dass dem Kunden der Lizenzgeber oder der Lizenznehmer bekannt ist und dass der Lizenzgeber oder der Lizenznehmer die für eine Überprüfung des Produkts erforderlichen Lizenzinformationen zur Verfügung stellt. Der für die Überprüfung einzelner Produkte auf deren Rechtmäßigkeit anfallende Verwaltungsaufwand ist enorm hoch, sodass eine routinemäßige Überprüfung einzelner Produkte kaum durchführbar ist. Beispielsweise in US 2015/278820 A1 oder in US 2011/197078 A1 werden Verfahren beschrieben, wie mit Hilfe von Einträgen in einer Blockchain einzelne Transaktionen wie beispielsweise das Übertragen einer Geldeinheit oder das Übertragen einer Lizenz von einem Lizenzgeber auf einen Lizenznehmer rechtssicher dokumentiert und damit überprüfbar gemacht werden kann. Allerdings kann mit diesen Verfahren nicht dokumentiert oder überprüft werden, ob ein einzelner Lizenznehmer eine ihm erteilte Lizenz berechtigterweise mehrfach für die Herstellung von lizenzgemäßen Produkten genutzt hat.

Es wird deshalb als eine Aufgabe der vorliegenden Erfindung angesehen, ein Verfahren zur elektronischen Dokumentation von Lizenzinformationen in einem Netzwerk mehrerer datenübertragend miteinander verbindbarer elektronischer Datenverarbeitungseinrichtungen so auszugestalten, dass die Verwaltung der Lizenzinformationen möglichst zuverlässig und einfach durchgeführt werden kann. Weiterhin soll eine Überprüfung, ob eine Lizenz rechtmäßig in Anspruch genommen wurde, sowohl für den Lizenzgeber als auch für einen Dritten möglich sein und mit möglichst geringem Aufwand zuverlässig durchgeführt werden können.

Diese Aufgabe wird erfindungsgemäß gelöst durch ein Verfahren, wobei die Lizenzinformationen in einer dezentralen Transaktionsdatenbank mit einer Blockchain-Technologie verwaltet werden, wobei die Transaktionsdatenbank eine Kette von Transaktionsblöcken enthält, und wobei der Transaktionsdatenbank neue Lizenzinformationen in neuen Transaktionsblöcken durch ein Blockerzeugungsverfahren hinzugefügt werden können,
- wobei in dem Blockerzeugungsverfahren zunächst eine mit Informationen über einen vorausgehenden Transaktionsblock der Transaktionsdatenbank erzeugte Ausgangsblockinformation und ein Integritätskriterium für die Hinzufügung des neuen Transaktionsblocks in die Transaktionsdatenbank aus dem Netzwerk beschafft wird,
- wobei anschließend ein neuer Transaktionsblock erzeugt wird, der das Integritätskriterium erfüllt und der mindestens die Ausgangsblockinformationen, die neue Lizenzinformation und eine Integritätsinformation enthält,
- und wobei schließlich der neue Transaktionsblock der Transaktionsdatenbank hinzugefügt wird,
   wobei ein Lizenzgeber bei einer Lizenzvergabe an einen Lizenznehmer eine neue Lizenzinformation mit einem Lizenzvergabeeintrag erzeugt, der in einem neuen Transaktionsblock mit dem Blockerzeugungsverfahren der Transaktionsdatenbank hinzugefügt wird, wobei der Lizenzvergabeeintrag mindestens eine Lizenzidentifikation enthält, und wobei der Lizenznehmer vor, während oder nach einer Nutzung der Lizenz des Lizenzgebers eine neue Lizenzinformation mit einem Lizenznutzungseintrag erzeugt, der in einem neuen Transaktionsblock mit dem Blockerzeugungsverfahren der Transaktionsdatenbank hinzugefügt wird, wobei der Lizenznutzungseintrag mindestens die Lizenzidentifikation des Lizenzvergabeeintrags und eine Nutzungsidentifikation enthält, dass der Lizenznutzungseintrag eine Lizenznutzungsinformation enthält und dass die Lizenznutzungsinformation in dem Lizenznutzungseintrag eine eindeutige Nutzungsseriennummer enthält.

Mit dem erfindungsgemäßen Verfahren können die Lizenzinformationen des Lizenzgebers und des Lizenznehmers in einer dezentralen Transaktionsdatenbank hinterlegt werden, die nicht zentral von dem Lizenzgeber oder dem Lizenznehmer eingerichtet und verwaltet werden muss, sondern mit der aus dem Stand der Technik bekannten Blockchain-Technologie verwaltet wird. Die dezentrale Transaktionsdatenbank steht jedem Teilnehmer beziehungsweise jeder Datenverarbeitungseinrichtung zur Verfügung, welche die Voraussetzungen für eine Teilnahme und Nutzung der Transaktionsdatenbank erfüllen. Um gültige Lizenzinformationen in der Transaktionsdatenbank hinterlegen zu können, müssen sich der Lizenzgeber und der Lizenznehmer nicht wechselseitig vertrauen oder Zugriffsrechte auf eine eigene Datenbank einräumen. Dennoch können mit dem erfindungsgemäßen Verfahren alle relevanten Aspekte der Sicherheit und der Vertraulichkeit der in der dezentralen Transaktionsdatenbank hinterlegten Lizenzinformationen berücksichtigt und in einfacher Weise umgesetzt werden.

Bei den bekannten Blockchain-Technologien wird durch die Vorgabe des Integritätskriteriums regelmäßig eine Aufgabe vorgegeben, deren Lösung mit Aufwand verbunden ist. Dieses auch als "Proof of Work" bezeichnete Konzept soll gewährleisten, dass neue Transaktionsblöcke nicht beliebig einfach und beliebig schnell erzeugt und der Transaktionsdatenbank hinzugefügt werden können. Als Integritätskriterium kann beispielsweise ein Schwellenwert für einen zulässigen Hash-Wert eines neuen Transaktionsblocks vorgegeben werden, in welchem eine oder mehrere Transaktionen bzw. zu hinterlegende Informationen sowie eine frei wählbare Integritätsinformation zusammengefasst sind. Die Integritätsinformation muss durch aufwändige Versuche so gewählt werden, dass der sich ergebende Hash-Wert für den neuen Transaktionsblock beispielsweise unterhalb des vorgegebenen Schwellenwerts liegt und damit das Integritätskriterium erfüllt. Eine Manipulation älterer Transaktionsblöcke würde dann erfordern, dass für alle nachfolgenden Transaktionsblöcke die Integritätsinformation neu ermittelt und das Integritätskriterium neu erfüllt werden muss, da in jedem nachfolgenden Transaktionsblock eine von dem vorausgehenden Transaktionsblock abhängende Ausgangsblockinformation enthalten ist, die sich bei einer Manipulation des vorausgehenden Transaktionsblocks ebenfalls verändern würde.

Da die Lizenzinformationen bei der Verwendung des erfindungsgemäßen Blockerzeugungsverfahrens nur dann der Transaktionsdatenbank hinzugefügt werden können, wenn ein die Lizenzinformationen enthaltender Transaktionsblock ein vorgebbares Integritätskriterium erfüllt und das Integritätskriterium derart vorgegeben werden kann, dass eine nachträgliche Manipulation und Veränderung von Lizenzinformationen in der Transaktionsdatenbank nahezu ausgeschlossen werden kann, sind die in der Transaktionsdatenbank hinterlegten Lizenzinformationen sehr vertrauenswürdig, ohne dass der Lizenzgeber oder der Lizenznehmer übermäßige Sicherheitsvorkehrungen für die Hinzufügung der Lizenzinformationen zu der Transaktionsdatenbank beachten und einhalten müssen. Zudem muss der Zugriff auf die Transaktionsdatenbank nicht beschränkt oder Dritten völlig verwehrt werden, um eine unerwünschte nachträgliche Veränderung der Lizenzinformationen ausschließen zu können.

Es sind aus der Praxis verschiedene Umsetzungen einer Blockchain-Technologie bekannt, mit denen es beliebigen Teilnehmern eines Netzwerkes ermöglicht wird, neue Transaktionsblöcke der Transaktionsdatenbank hinzuzufügen, sofern die betreffenden Teilnehmer die Voraussetzungen für eine Teilnahme an der Transaktionsdatenbank erfüllen. Diese Voraussetzungen betreffen in vielen Fällen lediglich eine in geeigneter Weise eingerichtete elektronische Datenverarbeitungseinrichtung, mit welcher ein üblicherweise standardisierter Zugriff auf die Transaktionsdatenbank durchgeführt werden kann, sowie eine Registrierung als Teilnehmer mit Zugangsberechtigung für die Transaktionsdatenbank. Es ist grundsätzlich möglich, dass das Blockerzeugungsverfahren, mit welchem eine neue Lizenzinformation in einem neuen Transaktionsblock der Transaktionsdatenbank hinzugefügt wird, weder von dem Lizenzgeber noch von dem Lizenznehmer, sondern vielmehr von einem unabhängigen Teilnehmer mit Zugriffsmöglichkeiten auf die Transaktionsdatenbank durchgeführt wird.

In vielen Fällen werden zunächst mehrere verschiedene Informationen gesammelt und zu einem Informationsblock zusammengefasst, von dem ausgehend der neue Transaktionsblock erzeugt wird. Es ist nicht notwendig und oftmals nicht praktikabel, dass für eine Lizenzinformation, die der Transaktionsdatenbank hinzugefügt werden soll, ein eigener neuer Transaktionsblock erzeugt wird. Vielmehr ist es üblich und zweckmäßig, dass die hinzuzufügende Lizenzinformation vielen Teilnehmern der Transaktionsdatenbank übermittelt wird und mit den aus der Blockchain-Technologie bekannten Verfahren einer der Teilnehmer den neuen Transaktionsblock erzeugt und der Transaktionsdatenbank hinzufügt. Die hinzuzufügende Lizenzinformation wird bei vielen Blockchain-Technologien üblicherweise allen denjenigen Teilnehmern übermittelt, die daran mitwirken, neue Transaktionsblöcke zu erzeugen und der Transaktionsdatenbank hinzuzufügen. Andere Teilnehmer, die lediglich Informationen oder Transaktionen in die Transaktionsdatenbank aufnehmen lassen wollen oder der Transaktionsdatenbank Informationen entnehmen wollen, jedoch nicht an der Erzeugung neuer Transaktionsblöcke mitwirken, benötigen die hinzuzufügenden Lizenzinformationen nicht und werden deshalb auch nicht mit Lizenzinformationen versorgt, die noch nicht in die Transaktionsdatenbank aufgenommen wurden. Das Blockerzeugungsverfahren und damit das Hinzufügen der Lizenzinformation zu der Transaktionsdatenbank muss demnach nicht von dem Lizenzgeber oder von dem Lizenznehmer selbst durchgeführt werden. Es kann auch vorkommen, dass mehrere Lizenzinformationen in denselben neuen Transaktionsblock eingetragen und gleichzeitig der Transaktionsdatenbank hinzugefügt werden.

Es ist erfindungsgemäß vorgesehen, dass der Lizenznutzungseintrag eine Lizenznutzungsinformation enthält. In gleicher Weise kann vorgesehen sein, dass jeder Lizenznutzungseintrag, der von dem Lizenznehmer erzeugt und in die Transaktionsdatenbank eingetragen wird, eine Lizenznutzungsinformation enthält, sodass der Lizenzgeber über die bereits erfolgte Inanspruchnahme seiner Lizenz und über die noch verbleibende und noch nicht in Anspruch genommene Lizenzrestnutzung informiert wird.

Die Lizenznutzungsinformation kann beispielsweise die Informationen beinhalten, in welchem Umfang der Lizenznehmer die Lizenz seit seinem zuletzt in die Transaktionsdatenbank eingetragenen Lizenznutzungseintrag genutzt hat. Sofern der Lizenznehmer für jede einzelne Inanspruchnahme der Lizenz einen Lizenznutzungseintrag erzeugt, kann die Lizenznutzungsinformation auch durch eine "1" oder einen fortlaufenden Zähler repräsentiert werden, der jeden Lizenznutzungseintrag des Lizenznehmers in der Transaktionsdatenbank erfasst. Es ist ebenso denkbar, dass der Lizenznehmer eine Anzahl von zwischenzeitlich lizenzgemäß hergestellten Produkten in einem Lizenznutzungseintrag zusammenfasst und eine dieser Anzahl entsprechende Lizenznutzungsinformation hinterlegt. Durch eine Überprüfung aller Lizenznutzungseinträge, die bis zu diesem Zeitpunkt in der Transaktionsdatenbank hinterlegt sind, können der Lizenzgeber und der Lizenznehmer jederzeit feststellen, in welchem Umfang die Lizenz bereits in Anspruch genommen wurde und in welchem Umfang noch eine weitere Inanspruchnahme der Lizenz möglich beziehungsweise vereinbart ist.

Es ist erfindungsgemäß vorgesehen, dass die Lizenznutzungsinformation in dem Lizenznutzungseintrag eine eindeutige Nutzungsseriennummer enthält. Diese Nutzungsseriennummer wird von dem Lizenznehmer erzeugt und kann zur Kennzeichnung eines von dem Lizenznehmer hergestellten lizenzgemäßen Produkts oder einer lizenzgemäßen Dienstleistung oder als Beleg für eine lizenzgemäße Nutzung der Nutzungsdatendatei durch den Lizenznehmer verwendet werden. So kann die Nutzungsseriennummer von dem Lizenznehmer wahlweise unverschlüsselt oder verschlüsselt als Kennzeichnung oder Beleg verwendet werden und beispielsweise an einem von dem Lizenznehmer unter Inanspruchnahme der Lizenz hergestellten Produkt angebracht werden. Durch die Aufnahme der Nutzungsseriennummer in den Lizenznutzungseintrag des Lizenznehmers wird diese Nutzungsseriennummer dem Lizenzgeber mitgeteilt. Sowohl der Lizenznehmer als auch der Lizenzgeber können anhand der Nutzungsseriennummern, die in den bereits in der Transaktionsdatenbank eingetragenen Lizenznutzungseinträgen hinterlegt sind, jedes Produkt mit einer Nutzungsseriennummer daraufhin überprüfen, ob es sich um eine gültige und von dem Lizenznehmer rechtmäßig vergebene Nutzungsseriennummer handelt.

Falls die Nutzungsseriennummer von dem Lizenznehmer unverschlüsselt in einem Lizenznutzungseintrag hinterlegt wird, der in die dezentrale Transaktionsdatenbank übernommen wird, kann auch jeder Dritte anhand der auf dem Produkt wiedergegebenen Nutzungsseriennummer den zugeordneten Lizenznutzungseintrag ermitteln und zumindest feststellen, dass zu dieser Nutzungsseriennummer ein gültiger Lizenznutzungseintrag erzeugt wurde. Diese Überprüfung eines mit einer Nutzungsseriennummer versehenen Produkts kann der Dritte allein durch eine Überprüfung der dezentralen Transaktionsdatenbank vornehmen, ohne dass der Dritte den Lizenznehmer oder den Lizenzgeber kennen muss und ohne dass dem Dritten nähere Einzelheiten über die zugrundeliegende Lizenzvereinbarung bekannt sind. Auf diese Weise kann zugunsten aller Beteiligten mit geringem Aufwand eine Überprüfung einzelner Produkte ermöglicht werden, die mit einer Nutzungsseriennummer versehen sind.

Die Nutzungsseriennummer kann durch eine beliebige Dateninformation repräsentiert werden. So können beispielsweise auch eindimensionale oder zweidimensionale Barcodes oder alphanummerische Zeichenfolgen als Nutzungsseriennummer verwendet werden. Die Nutzungsseriennummer kann als eine eindeutige Kennzeichnung in einer beliebigen Darstellungsform repräsentiert und verwendet werden. Dabei bedeutet eindeutig in diesem Zusammenhang, dass keine zwei zulässigen Nutzungsseriennummern übereinstimmen dürfen, damit eine eindeutige Zuordnung der Nutzungsseriennummer zu einer identifizierbaren Nutzung möglich ist.

Um eine unbefugte Manipulation oder Kopie einer von dem Lizenznehmer berechtigterweise vergebenen Nutzungsseriennummer zu verhindern, die es einem Dritten ermöglichen würde, ein unrechtmäßig hergestelltes Produkt beispielsweise mit einer Kopie einer Nutzungsseriennummer zu kennzeichnen, ist zweckmäßigerweise vorgesehen, dass der Lizenznehmer eine derartige Manipulation und einen entsprechenden Missbrauch der von ihm vergebenen und zur Kennzeichnung seines Produkts verwendeten Nutzungsseriennummer durch geeignete Maßnahmen erschwert. Aus der Praxis sind zahlreiche geeignete Maßnahmen bekannt, mit welchen eine unbefugte Kopie der Nutzungsseriennummer durch Dritte erschwert werden kann.

Es ist ebenfalls möglich, dass die Nutzungsseriennummer mit dem Lizenzschlüssel verschlüsselt ist. Auf diese Weise können Dritte auch bei einer Überprüfung aller Lizenzinformationen in der Transaktionsdatenbank die von dem Lizenznehmer vergebene Nutzungsseriennummer nicht der vom Lizenzgeber vergebenen Lizenz zuordnen.

Gemäß einer Ausgestaltung des Erfindungsgedankens ist vorgesehen, dass der Lizenzvergabeeintrag und der Lizenznutzungseintrag unterschiedliche Informationsarten enthalten und deshalb auch ein voneinander abweichendes Datenformat aufweisen. Dabei können die Anzahl der Daten ebenso wie die jeweilige Länge bzw. Bitanzahl eines einzelnen Dateneintrags voneinander abweichen. Sowohl der Lizenzgeber als auch der Lizenznehmer kennen die betreffenden Datenformate und können die jeweils relevanten Lizenzinformationen und Nutzungsidentifikationen dem betreffenden Transaktionsblock entnehmen. Es ist ebenfalls möglich, dass der Lizenzvergabeeintrag und der Lizenznutzungseintrag in den jeweiligen Transaktionsblöcken durch eine gesonderte Transaktionsidentifikation gekennzeichnet und voneinander unterschieden werden können.

Da die dezentrale Transaktionsdatenbank über jede in geeigneter Weise eingerichtete elektronische Datenverarbeitungseinrichtung eingesehen werden kann, ist es Dritten grundsätzlich möglich, in der Transaktionsdatenbank Lizenzinformationen zu ermitteln und abzurufen, mit denen eine Überprüfung eines unter Inanspruchnahme einer Lizenz hergestellten Produkts möglich wird. Die frei verfügbaren Lizenzinformationen können von beliebigen Dritten auch ohne eine genaue Kenntnis über den Lizenzgeber oder den Lizenznehmer und auch ohne nähere Kenntnisse über die zugrundeliegende Lizenzvereinbarung eingesehen werden. Aus diesem Grund ist es zweckmäßig, dass der Lizenzgeber und der Lizenznehmer diejenigen Informationen über die Lizenzvereinbarung, die von Dritten eingesehen werden sollen, unverschlüsselt hinterlegen, während diejenigen Informationen, die der Lizenzgeber und der Lizenznehmer vertraulich behandeln wollen, in geeigneter Weise verschlüsselt sein sollten. Bei asymmetrischen Verschlüsselungsverfahren sind dem Lizenzgeber und dem Lizenznehmer jeweils ein frei verfügbarer öffentlicher Schlüssel und ein nur dem betreffenden Nutzer verfügbarer privater Schlüssel zugeordnet. Der Lizenzgeber und der Lizenznehmer können jeweils für den anderen bestimmte Informationen mit dessen öffentlichen Schlüssel verschlüsseln, so dass die verschlüsselten Informationen nur mit dem zugeordneten privaten Schlüssel entschlüsselt werden können.

Erfindungsgemäß ist optional vorgesehen, dass der Lizenzvergabeeintrag einen mit einem öffentlichen Schlüssel des Lizenznehmers verschlüsselten Lizenzschlüssel enthält, sodass der Lizenzgeber und der Lizenznehmer mit dem Lizenzschlüssel verschlüsselte Informationen erzeugen und entschlüsseln können. Der Lizenzschlüssel ist zur Verwendung in einem symmetrischen Verschlüsselungsverfahren vorgesehen, bei dem Informationen, die mit dem Lizenzschlüssel verschlüsselt werden, nur mit dem selben Lizenzschlüssel wieder entschlüsselt werden können. Durch die Aufnahme des mit einem asymmetrischen Verschlüsselungsverfahren verschlüsselten Lizenzschlüssel in den Lizenzvergabeeintrag kann der Lizenzgeber den von ihm erzeugten Lizenzschlüssel dem Lizenznehmer zur Verfügung stellen, so dass beide mit diesem Lizenzschlüssel verschlüsselte Informationen vertraulich in der dezentralen Transaktionsdatenbank austauschen können. Dritte können zwar die Lizenzinformation aus der Transaktionsdatenbank einsehen, die mit dem nur dem Lizenzgeber und dem Lizenznehmer vorliegenden Lizenzschlüssel verschlüsselten Informationen darin jedoch nicht entschlüsseln und verwenden.

Eine gesonderte Kommunikation zwischen dem Lizenzgeber und dem Lizenznehmer, die mit gesonderten Mitteln vertraulich ausgestaltet und abgesichert werden müsste, ist nicht erforderlich. Sofern es der Lizenzgeber und der Lizenznehmer wünschen, können nach dem Austausch des Lizenzschlüssels vertrauliche Informationen im Zusammenhang mit der Lizenzvergabe ausgetauscht werden und insbesondere auch einzelne Nutzungsinformationen des Lizenznehmers, die vertraulich und nur für den Lizenzgeber bestimmt sind, mit dem Lizenzschlüssel verschlüsselt und ausgetauscht werden. Die mit dem Lizenzschlüssel verschlüsselten Informationen können dann ohne gesonderte Sicherheitsmaßnahmen ausgetauscht werden und beispielsweise auch in neuen Transaktionsblöcken der dezentralen Transaktionsdatenbank hinzugefügt werden.

Gemäß einer besonders vorteilhaften Ausgestaltung des Erfindungsgedankens ist vorgesehen, dass die Nutzungsinformationen in dem von dem Lizenznehmer erzeugten Lizenznutzungseintrag mit dem Lizenzschlüssel verschlüsselt sind. Dadurch kann erreicht werden, dass ausschließlich der Lizenzgeber und der Lizenznehmer die betreffenden Nutzungsinformationen entschlüsseln und auswerten können.

Einer vorteilhaften Ausgestaltung des erfindungsgemäßen Verfahrens zufolge ist vorgesehen, dass der Lizenzvergabeeintrag eine Dateiinformation enthält, die eine Nutzungsdatendatei repräsentiert. In der Nutzungsdatendatei können beispielsweise Informationen oder Befehlsfolgen enthalten sein, die der Lizenznehmer benötigt, um bei einer Inanspruchnahme der Lizenz ein lizenzgemäßes Produkt herzustellen oder eine lizenzgemäße Dienstleistung zu erbringen. So können in der Nutzungsdatendatei beispielsweise Instruktionen hinterlegt sein, mit denen ein 3D-Drucker ein lizenzgemäßes Produkt herstellen kann. In der Nutzungsdatendatei können auch CAD-Informationen oder CAM-Informationen enthalten sein, die von dem Lizenznehmer einer automatisierten Produktionsanlage zugeführt werden können, um ein lizenzgemäßes Produkt herstellen zu können.

Bei der Dateiinformation kann es sich beispielsweise um einen aus der Nutzungsdatendatei ermittelten Hash-Wert handeln, der die betreffende Nutzungsdatendatei eindeutig identifiziert. Die Dateiinformation kann mit dem Lizenzschlüssel verschlüsselt sein. Auf diese Weise kann verhindert werden, dass ein Dritter, der auf die Nutzungsdatendatei zugreifen kann und auch einen Hash-Wert für die Nutzungsdatendatei berechnen kann, diesen Hash-Wert mit Lizenzinformationen aus der Transaktionsdatenbank vergleicht und Informationen über eine eventuell zu dieser Nutzungsdatendatei bestehende Lizenzvereinbarung zusammenstellen kann. Da die Dateiinformation mit dem nur dem Lizenzgeber und dem Lizenznehmer bekannten Lizenzschlüssel verschlüsselt ist, können nur der Lizenzgeber und der Lizenznehmer Lizenzinformationen mit der verschlüsselten Dateiinformation erzeugen oder in der Transaktionsdatenbank identifizieren.

Bei der Nutzungsdatendatei kann es sich beispielsweise auch um ein digital gespeichertes Buchwerk oder um digitale audiovisuelle Daten handeln, die an einen Verlag übermittelt werden, der das betreffende Werk produzieren und herausgeben soll, oder die einem Nutzer im Rahmen einer Nutzungslizenz zur Verfügung gestellt werden sollen. Es ist ebenfalls denkbar, dass die Nutzungsdatendatei medizinische oder anderweitig vertrauliche Informationen enthält, deren Zugriff und Nutzung durch eine Lizenzvereinbarung oder eine lizenzähnliche Vereinbarung vorgegeben und kontrolliert wird.

Einer Ausgestaltung des Erfindungsgedankens zufolge ist vorgesehen, dass der Lizenzvergabeeintrag eine Lizenzgeberidentifikation und eine Lizenznehmeridentifikation enthält. Über die Lizenzgeberidentifikation und die Lizenznehmeridentifikation können sowohl der Lizenzgeber als auch der Lizenznehmer den Lizenzvergabeeintrag unabhängig von der Lizenzidentifikation identifizieren und die darin enthaltenen Lizenzinformationen nutzen. Falls die Lizenzgeberidentifikation und die Lizenznehmeridentifikation unverschlüsselt in dem Lizenzvergabeeintrag hinterlegt werden, können auch Dritte, die Zugriff auf die Transaktionsdatenbank haben, Kenntnis über den Lizenzgeber und den Lizenznehmer sowie die Existenz einer Lizenzvereinbarung zwischen diesem Lizenzgeber und diesem Lizenznehmer erhalten. Es kann zweckmäßig sein, dass die Lizenzgeberidentifikation und die Lizenznehmeridentifikation mit dem Lizenzschlüssel oder mit einem anderen Algorithmus verschlüsselt in dem Lizenzvergabeeintrag hinterlegt sind, sodass ausschließlich der Lizenzgeber und der Lizenznehmer Kenntnis von der jeweiligen Identifikation erhalten. Da die Lizenzgeberidentifikation und die Lizenznehmeridentifikation auch für die Erzeugung weiterer Transaktionsblöcke in der Transaktionsdatenbank verwendet werden könnten, wird durch eine verschlüsselte Hinterlegung der Lizenzgeberidentifikation und der Lizenznehmeridentifikation ein unbefugter Missbrauch dieser Informationen zu Erzeugung weiterer Lizenzinformationen in der dezentralen Transaktionsdatenbank verhindert.

Um eine Nutzung der Lizenz durch Unbefugte zu vermeiden, die nicht der Lizenznehmer sind, ist in vorteilhafter Weise vorgesehen, dass nur der durch die Lizenznehmeridentifikation identifizierte Lizenznehmer die Berechtigung erhält, einen zulässigen Lizenznutzungseintrag zu erzeugen. Dies kann beispielsweise dadurch sichergestellt werden, dass die Lizenzidentifikation Bestandteile aufweist oder zumindest teilweise aus Informationen zusammengesetzt ist, die nur dem Lizenzgeber und dem Lizenznehmer bekannt sind. So könnte beispielsweise der Lizenzgeber dem Lizenznehmer eine verschlüsselte Information zukommen lassen, die als Bestandteil in der Lizenzidentifikation enthalten ist oder die für die Erzeugung der Lizenzidentifikation zwingend notwendig ist. Die verschlüsselte Information könnte beispielsweise der verschlüsselte Lizenzschlüssel sein, wobei der Lizenzgeber den von dem Lizenznehmer zu einem symmetrischen Verschlüsselungsverfahren erzeugten Lizenzschlüssel mit dem öffentlichen Schlüssel des Lizenznehmers verschlüsselt und dem Lizenznehmer zukommen lässt. Es ist ebenfalls denkbar, dass eine andere für die Lizenzidentifikation notwendige und von dem Lizenzgeber vorgegebene Information mit einem öffentlichen Schlüssel des durch die Lizenznehmeridentifikation identifizierten Lizenznehmers verschlüsselt ist, sodass nur der berechtigte Lizenznehmer, der auch im Besitz des diesem öffentlichen Schlüssel zugeordneten privaten Schlüssels ist, die betreffende Information zu entschlüsseln, um anschließend einen zulässigen Lizenznutzungseintrag erzeugen zu können.

Mit einem Prüfungsverfahren kann dann gegebenenfalls auch automatisiert überprüft werden, ob für einen neuen Lizenznutzungseintrag die von dem Lizenzgeber vorgegebene und in geeigneter Weise verschlüsselte Information für die Erzeugung des Lizenznutzungseintrags verwendet wurde bzw. verwendet werden soll. Nur in diesem Fall bei einer erfolgreichen Bestätigung, dass die betreffende Information bei der Erzeugung des Lizenznutzungseintrags vorliegt, wird der Lizenznutzungseintrag auch tatsächlich erzeugt, anderenfalls ein entsprechender Versuch abgelehnt oder zurückgewiesen. Es kann auch auf andere Weise eine Überprüfung der Berechtigung des Lizenznehmers durchgeführt werden, beispielsweise durch ein gesondert ablaufendes Überprüfungsverfahren, an dem der Lizenzgeber beteiligt ist und die Berechtigung des Lizenznehmers bestätigen muss.

Im Hinblick auf einen möglichst geringen Verwaltungsaufwand sowie für eine möglichst rasche und automatisierte Durchführung des erfindungsgemäßen Verfahrens ist optional vorgesehen, dass die Berechtigung des Lizenznehmers zur Erzeugung eines zulässigen Lizenznutzungseintrags automatisiert bei der Erzeugung eines neuen Transaktionsblocks überprüft und die Erzeugung verweigert wird, wenn bei einer Überprüfung der Lizenznehmeridentifikation keine Berechtigung nachgewiesen werden kann. Eine automatisierte Überprüfung ist im Rahmen der Blockchain-Technologie beispielsweise mit "Smart Contracts" möglich. Smart Contracts sind Computerprogrammmodule, die bei der Erzeugung eines neuen Transaktionsblocks automatisiert ablaufen und dabei verschiedene Überprüfungen sowohl der Inhalte eines neuen Transaktionsblocks als auch der daran beteiligten Nutzer durchführen können. Die Smart Contracts können auch dazu eingesetzt werden, automatisiert aus den vorgegebenen und den entsprechenden Computerprogrammmodulen übergebenen Informationen einen Lizenzvergabeeintrag oder Lizenznutzungseintrag zu erzeugen und mit einem Transaktionsblock der Transaktionsdatenbank hinzuzufügen.

Um mit geringem Aufwand eine eindeutige Lizenzidentifikation zu erzeugen, die für alle Lizenzinformationen zu einer bestimmten Lizenzvereinbarung verwendet werden kann und gleichzeitig eine Verwechslung mit Lizenzinformationen zu einer andere Lizenzvereinbarung möglichst ausschließt, ist vorgesehen, dass die Lizenzidentifikation ein mit einem Hash-Algorithmus berechneter Hash-Wert ist, der ausgehend von mindestens der Lizenzgeberidentifikation, der Lizenznehmeridentifikation und der verschlüsselten Dateiinformation ermittelt wurde. Zusätzlich zu der die beteiligten Parteien der Lizenzvereinbarung identifizierenden Lizenzgeberidentifikation und Lizenznehmeridentifikation kann die verschlüsselte Dateiinformation dazu verwendet werden, die der Nutzungsdatendatei zugrundeliegende Lizenzvereinbarung zu identifizieren und eine eindeutige Lizenzidentifikation zu erzeugen. Da die Dateiinformation zweckmäßigerweise in verschlüsselter Form in die Lizenzidentifikation eingeht und zur Verschlüsselung der Dateiinformation der Lizenzschlüssel benötigt wird, der ausschließlich dem Lizenzgeber und dem Lizenznehmer bekannt ist, können Dritte über die Lizenzidentifikation keine Rückschlüsse auf die Dateiinformation und damit auf eine Nutzungsdatendatei ziehen, die Gegenstand der Lizenzvereinbarung ist.

Eine vorangehend beschriebene automatisierte Überprüfung der Berechtigung eines Lizenznehmers könnte beispielsweise darin bestehen, dass automatisiert überprüft wird, ob sich ausgehend von der Lizenzgeberidentifikation und der Lizenznehmeridentifikation sowie mit dem Hashkey der Dateiinformation der Lizenzschlüssel erzeugen lässt.

Zur Vereinfachung der Verwaltung der Lizenzinformationen ist erfindungsgemäß vorgesehen, dass der Lizenzvergabeeintrag eine Nutzungsbeschränkungsinformation enthält. Insbesondere bei einer Lizenzvereinbarung, mit welcher der Lizenzgeber seinem Lizenznehmer die Herstellung oder Nutzung einer vorgegebenen Anzahl von Produkten lizensiert oder eine quantitative Vorgabe für die Inanspruchnahme seiner Lizenz vorgesehen ist, kann diese Information durch die Nutzungsbeschränkungsinformation als Stückzahl dem Lizenznehmer mitgeteilt und gleichzeitig in der Transaktionsdatenbank hinterlegt werden.

Es ist ebenfalls denkbar, dass die Lizenznutzungsinformation als Differenz zwischen der Nutzungsbeschränkungsinformation abzüglich aller bereits bis zu diesem Zeitpunkt in Anspruch genommenen Lizenznutzungen ermittelt und von dem Lizenznehmer in seinen Lizenznutzungseintrag eingetragen wird. Auf diese Weise kann dem jeweils aktuellen Lizenznutzungseintrag ohne einen weiteren Rückgriff auf zurückliegende Lizenznutzungseinträge die Information entnommen werden, in welchem Umfang die vereinbarte Lizenz noch durch den Lizenznehmer in Anspruch genommen werden kann. Da die Nutzungsbeschränkungsinformation bekannt ist, kann ausgehend von der verbleibenden Restnutzung auch ermittelt werden, in welchem Umfang die Lizenz bereits in Anspruch genommen wurde.

Die Nutzungsbeschränkungsinformation des Lizenzgebers kann auch einen Zeitraum oder eine Zeitdauer beinhalten. Der Lizenznehmer kann die Nutzungsdatendatei innerhalb des durch die Nutzungsbeschränkungsinformationen vorgegebenen Zeitraums nutzen und dabei entweder eine maximale Anzahl von Zugriffen durchführen oder aber beliebig oft darauf zugreifen. Außerhalb oder nach Ablauf der lizensierten Nutzungsdauer kann der Zugriff auf die Nutzungsdatendatei gesperrt sein, so dass eine unbefugte Nutzung der Nutzungsdatendatei ausgeschlossen ist. Mit derartigen Nutzungsbeschränkungsinformationen kann beispielsweise eine digitale Rechteverwaltung für in digitaler Form verteilte Text-, Musik- oder audiovisuelle Werke durchgeführt werden.

Um einerseits einen geschützten und verschlüsselten Informationsaustausch zwischen Lizenznehmer und dem Lizenzgeber in der Transaktionsdatenbank zu ermöglichen und andererseits es Dritten zu ermöglichen, anhand einer Nutzungsseriennummer die Rechtmäßigkeit eines Produktes oder einer Lizenznutzung zu überprüfen, ist erfindungsgemäß vorgesehen, dass der Lizenznehmer zu jedem Lizenznutzungseintrag, der mit dem Lizenzschlüssel verschlüsselte Lizenznutzungsinformationen enthält, zusätzlich eine weitere Lizenzinformation der Transaktionsdatenbank hinzufügt, wobei die weitere Lizenzinformationen einen Lizenzseriennummerneintrag beinhaltet, der mindestens die Lizenznehmeridentifikation und die nicht verschlüsselte eindeutige Nutzungsseriennummer enthält. Jeder Dritte kann dann anhand der nicht verschlüsselten Nutzungsseriennummer den Lizenzseriennummerneintrag in der Transaktionsdatenbank identifizieren und somit Auskunft darüber erhalten, dass die Nutzungsseriennummer zu einem gültigen Lizenznutzungseintrag gehört, der von dem Lizenznehmer erzeugt wurde, dessen Lizenznehmeridentifikation ebenfalls bekanntgegeben wird. Über die Lizenznehmeridentifikation kann der Dritte den Lizenznehmer identifizieren und gegebenenfalls ergänzende Informationen zu dem mit der Nutzungsseriennummer gekennzeichneten Produkt erfragen.

Auf diese Weise werden nicht nur die Vergabe und die Nutzung einer Lizenz in der Transaktionsdatenbank dokumentiert, sondern auch ein Rechtmäßigkeitsnachweis für ein mit der Nutzungsseriennummer gekennzeichnetes Produkt erzeugt und bereitgestellt. Dritte können anhand der in dem Transaktionsblock enthaltenen Nutzungsseriennummer sich davon überzeugen, dass das betreffende Produkt im Rahmen einer rechtmäßigen Nutzung eines Lizenzvertrags durch den Lizenznehmer hergestellt wurde. Eine solche Überprüfung der Nutzungsseriennummer kann von Jedermann über eine gegebenenfalls automatisierbare Abfrage bei der Transaktionsdatenbank vorgenommen werden, und dadurch die Rechtmäßigkeit des mit der Nutzungsseriennummer gekennzeichneten Produkts verifiziert werden, ohne dass ein direkter Kontakt mit dem Lizenzgeber oder dem Lizenznehmer notwendig wird. Für unbefugte Dritte ist es dadurch kaum möglich, nachgeahmte Produkte mit einer falschen Nutzungsseriennummer zu versehen und erfolgreich in den Handel zu bringen, da sich nachgeahmte Produkte mit einer falschen Nutzungsseriennummer leicht durch eine fehlgeschlagene Überprüfung der Transaktionsdatenbank identifizieren lassen.

Es ist ein wesentlicher Vorteil des erfindungsgemäßen Verfahrens, dass bei Verwendung einer geeigneten Verschlüsselung der jeweils als vertraulich erachteten Informationen beispielsweise die Lizenzvergabe und insbesondere der Umfang der Lizenzvergabe sowie der berechtigte Lizenznehmer oder zumindest dessen bereits erfolgte Nutzung nur dem Lizenzgeber und dem Lizenznehmer bekannt sind und trotz der Protokollierung in Transaktionsblöcken in der Transaktionsdatenbank Dritte diese verschlüsselten Informationen nicht interpretieren können. Zu Gunsten von Dritten kann die auf einem Produkt wiedergegebene Nutzungsseriennummer im Klartext in einer entsprechenden Lizenzinformation in der Transaktionsdatenbank hinterlegt sein, sodass eine einfache Überprüfung eines rechtmäßig hergestellten Produkts und die Identifizierung von unbefugten Nachahmungen für jeden Beteiligten möglich sind.

Gemäß einer besonders vorteilhaften Ausgestaltung des Erfindungsgedankens ist vorgesehen, dass jeder neue Transaktionsblock, der einen Lizenzvergabeeintrag oder einen Lizenznutzungseintrag enthält, mit Hilfe eines auf einem Datenverarbeitungssystem ausgeführten Software-Moduls der Transaktionsdatenbank hinzugefügt wird, wobei mit dem Software-Modul automatisiert überprüft wird, ob der Lizenzvergabeeintrag von dem Lizenzgeber beziehungsweise der Lizenznutzungseintrag von dem Lizenznehmer veranlasst wird, und ob der Lizenznutzungseintrag sich auf einen vorausgegangenen Lizenzvergabeeintrag bezieht. Derartige Software-Module, mit deren Hilfe vor dem Hinzufügen eines Transaktionsblocks in die Transaktionsdaten die Gültigkeit der in dem Transaktionsblock zusammengefassten Informationen anhand vorgegebener Gültigkeitskriterien überprüft werden kann, sind aus der Praxis zu verschiedenen Implementierungen der Blockchain-Technologie bekannt. Geeignete Software-Module können eine geeignete Implementation von Gültigkeitsregeln beinhalten, die auch als "Smart Contracts" bezeichnet werden. Mit Hilfe dieser Software-Module können die erforderlichen Gültigkeitsregeln automatisiert abgearbeitet und überprüft werden, sodass eine unbefugte Manipulation bei der Hinzufügung neuer Lizenzinformationen zu der dezentralen Transaktionsdatenbank erschwert oder weitgehend ausgeschlossen werden kann, ohne dass der auf Seiten des Lizenzgebers oder Lizenznehmers anfallende Aufwand erhöht wird. Mit den Software-Modulen können auch weitere Gültigkeitsregeln zu neuen Lizenzgebereinträgen oder Lizenznutzungseinträgen überprüft werden, um in Abhängigkeit von einer angestrebten Manipulationssicherheit das unbefugte Erzeugen von Lizenzinformationen in der Transaktionsdatenbank zu erschweren.

Aus der Praxis sind verschiedene Umsetzungen und Implementierungen von Blockchain-Technologien zur Verwaltung von dezentralen Transaktionsdatenbanken bekannt, die zumindest teilweise auch Implementationen geeigneter Software-Module beziehungsweise "Smart-Contract"-Lösungen beinhalten. Bei der Durchführung des erfindungsgemäßen Verfahrens zur elektronischen Dokumentation von Lizenzinformationen kann auf bereits existierende Blockchain-Technologien zurückgegriffen werden. In vielen Fällen ist lediglich eine geringe Anpassung der bekannten Blockchain-Technologien und Implementierungen an die Bedürfnisse der an einer Lizenzvereinbarung beteiligter Parteien und an die in der dezentralen Transaktionsdatenbank zu hinterlegenden Lizenzinformationen erforderlich. Es können auch geeignete Schnittstellen für Dritte bereitgestellt werden, mit denen beispielsweise ausgehend von einer vorgegebenen Nutzungsseriennummer Überprüfungen auf die Rechtmäßigkeit der entsprechend gekennzeichneten Produkte durchgeführt werden können oder ergänzende Informationen zu einer Lizenzvereinbarung und den beteiligten Parteien bereitgestellt werden, denen die Nutzungsseriennummer zugeordnet ist. Da die zeitaufwendigen und arbeitsintensiven Verfahrensschritte und insbesondere das erfindungsgemäße Blockerzeugungsverfahren weitgehend automatisiert werden können, fällt weder dem Lizenzgeber noch dem Lizenznehmer ein übermäßig großer Aufwand für die Verwaltung und Nutzung der Lizenzinformationen an. Zudem kann durch die Verwendung einer dezentralen Transaktionsdatenbank, die mit den in der Praxis bereits bewährten Blockchain-Technologien verwaltet werden kann, auf die gesonderte Bereitstellung von Lizenzinformationen durch den Lizenzgeber oder den Lizenznehmer und auf einen gesonderten Aufwand für den in vielen Fällen gewünschten Schutz vor unbefugten Zugriffen oder Manipulationen dieser Lizenzinformationen durch den Lizenzgeber oder den Lizenznehmer verzichtet werden.

Für die Durchführung des erfindungsgemäßen Verfahrens können derartige Software-Module vorteilhaft eingesetzt werden. Dabei kann anhand von Informationen, die nur dem Lizenzgeber oder dem Lizenznehmer zur Verfügung stehen, in automatisierten Verfahrensschritten überprüft werden, ob der Lizenzvergabeeintrag von dem Lizenzgeber und ein Lizenznutzungseintrag von dem Lizenznehmer stammt, bevor der betreffende Lizenzvergabeeintrag oder der Lizenznutzungseintrag einem neuen Transaktionsblock und damit auch der Transaktionsdatenbank hinzugefügt wird. Eine Manipulation der Lizenzinformationen durch Dritte wird dadurch erheblich erschwert, ohne dass die Beteiligten einen höheren Aufwand oder gesonderte Sicherheitsmaßnahmen betreiben müssen.

Die Erfindung betrifft auch ein Verfahren zur automatisierten Freigabe einer Nutzungsdatendatei zur Nutzung in einer mit dem Netzwerk verbindbaren Datenverarbeitungseinrichtung einer Nutzungsvorrichtung, wobei eine Freigabeberechtigung für eine Berechtigungsanfrage aus einer elektronischen Dokumentation von Lizenzinformationen abgeleitet wird. Erfindungsgemäß ist vorgesehen, dass die elektronische Dokumentation von Lizenzinformationen mit dem vorangehend beschriebenen erfindungsgemäßen Verfahren zur elektronischen Dokumentation von Lizenzinformationen über eine Vergabe einer Lizenz und über eine Inanspruchnahme dieser Lizenz in einem Netzwerk mehrerer datenübertragend miteinander verbindbarer elektronischer Datenverarbeitungseinrichtungen verwaltet wird, wobei die Lizenzinformationen mindestens einen Lizenzvergabeeintrag beinhalten, wobei in einem Berechtigungsabfrageschritt in der Transaktionsdatenbank diejenigen Lizenzinformationen ermittelt und als Berechtigungsinformationen ausgelesen werden, die über die Dateninformation der freizugebenden Nutzungsdatendatei zugeordnet sind, oder die eine vorab in der Datenverarbeitungseinrichtung der Nutzungsvorrichtung hinterlegte Lizenzidentifikation enthalten, und wobei in einem nachfolgenden Berechtigungsprüfungsschritt anhand der Berechtigungsinformationen eine Berechtigungsfreigabe ermittelt wird, indem überprüft wird, ob die Berechtigungsanfrage eine Nutzung der Nutzungsdatendatei betrifft, die nicht durch die Nutzungsbeschränkungsinformation ausgeschlossen ist oder anhand der Lizenznutzungsinformationen bereits durchgeführt wurde und erschöpft ist, und die Nutzungsdatendatei für eine Nutzung mit der Nutzungsvorrichtung freigegeben wird, falls die Berechtigungsfreigabe festgestellt ist.

Eine im Sinne der Erfindung als Nutzungsvorrichtung dienende Vorrichtung kann eine automatisierte Produktionsanlage wie beispielsweise ein 3D-Drucker sein, mit welchem anhand von Informationen aus einer freizugebenden Nutzungsdatendatei eine vorgegebene Anzahl von Produkten hergestellt werden soll. Bei der Nutzungsvorrichtung kann es sich auch um eine Vorrichtung zur Wiedergabe von Bild- und/oder Toninformationen der Nutzungsdatendatei handeln, um beispielsweise von einem Nutzer erworbene Nutzungsrechte an Videodaten, Musikdaten oder Textdaten im Rahmen einer lizensierten Nutzung wiederzugeben. Die Nutzungsvorrichtung kann als Komponente einer digitalen Rechtverwaltung eingesetzt werden, mit der digitale Daten, an denen ein Lizenznehmer Nutzungsrechte erworben hat, im Rahmen und Umfang der von ihm erworbenen Nutzungsrechte wiedergegeben werden und genutzt werden können. Die Nutzungsvorrichtung kann vielfältig ausgestaltet und für viele verschiedene Nutzungszwecke vorgesehen sein. Die Nutzungsvorrichtung muss lediglich eine geeignet eingerichtete und mit einem Netzwerk verbindbare Datenverarbeitungseinrichtung aufweisen, um Informationen aus der Transaktionsdatenbank abrufen und verarbeiten zu können.

Um zu ermitteln, ob eine von dem Nutzer gewünschte Nutzung einer Nutzungsdatendatei von der Lizenzvereinbarung abgedeckt und damit berechtigt ist, kann die Nutzungsvorrichtung automatisiert auf die Transaktionsdatenbank zugreifen und in einem Berechtigungsabfrageschritt diejenigen Lizenzinformationen ermitteln, die für die Überprüfung der Berechtigung zur Nutzung der Nutzungsdatendatei relevant sind. Dabei können entweder anhand der Nutzungsdatendatei zugeordneten Dateiinformation alle für diese Dateiinformation relevanten Lizenzinformationen ermittelt und ausgewertet werden, um den Umfang der von dem Lizenzgeber lizensierten Nutzung und den Umfang der von dem Lizenznehmer bereits in Anspruch genommenen Nutzung berechnen zu können. Die hierfür relevanten Lizenzinformationen können auch anhand einer vorab in der Nutzungsvorrichtung hinterlegten Lizenzidentifikation ermittelt werden. Die Lizenzidentifikation kann dabei von einem Nutzer unmittelbar eingegeben oder aber anhand der zur Ermittlung der Lizenzidentifikation notwendigen Informationen wie beispielsweise anhand von mindestens der Lizenzgeberidentifikation, der Lizenznehmeridentifikation und der verschlüsselten Dateiinformation ermittelt werden, sofern diese Informationen von einem Nutzer oder automatisiert in der Nutzungsvorrichtung hinterlegt werden. In dem nachfolgenden Berechtigungsprüfungsschritt kann dann die Berechtigungsfreigabe ermittelt und festgestellt werden, ob der Nutzer und Lizenznehmer zu der von ihm gewünschten Nutzung der Nutzungsdatendatei berechtigt ist. Sofern die Nutzungsbeschränkungsinformation eine vorgegebene Anzahl lizensierter Nutzungen beinhaltet und bereits eine vorausgegangene Nutzung der Nutzungsdatendatei erfolgt ist und in der Transaktionsdatenbank hinterlegt ist, kann die Berechtigung dadurch überprüft werden, dass die insgesamt erfolgte Lizenznutzung bestimmt und mit der von dem Lizenzgeber vorgegebenen maximalen Lizenznutzung verglichen wird, die durch die Lizenzvergabeanzahl repräsentiert wird. Falls bei einer vorausgegangenen Lizenznutzung bereits eine die noch verbleibende Lizenznutzung repräsentierende Lizenznutzungsinformation in der Transaktionsdatenbank hinterlegt ist, reicht diese Information aus, um die Berechtigung für die gewünschte Nutzung der Nutzungsdatendatei überprüfen und beurteilen zu können. Falls die Nutzungsbeschränkungsinformationen eine Zeitdauer oder einen Zeitraum beinhalten, kann überprüft werden, ob die Berechtigungsanfrage eine Nutzung der Nutzungsdatendatei in dem lizensierten Zeitraum betrifft und die Nutzungsdatendatei in Reaktion auf die Berechtigungsanfrage sofort oder zu einem vorgegebenen Nutzungszeitpunkt freigegeben wird.

Die Nutzungsdatendatei wird für eine Nutzung mit der Nutzungsvorrichtung nur dann freigegeben, falls für die gewünschte Nutzung eine Berechtigung besteht. Sowohl bei den aus der Praxis bekannten Systemen für eine digitale Rechteverwaltung als auch bei Produktionsanlagen wie beispielsweise 3D-Druckern, die ausgehend von den in der Nutzungsdatendatei hinterlegten Instruktionen ein Produkt herstellen können, sollte durch geeignete Maßnahmen sichergestellt werden, dass eine unbefugte Nutzung der Nutzungsdatendatei möglichst erschwert oder gegebenenfalls vollständig verhindert werden kann. Mit dem erfindungsgemäßen Verfahren zur automatisierten Freigabe der Nutzungsdatendatei kann der Aufwand für die Überprüfung der Berechtigung zur Nutzung der Nutzungsdatendatei erheblich reduziert und das Freigabeverfahren automatisiert werden. Durch die erfindungsgemäß mögliche Automatisierung werden nicht nur die Berechtigungsüberprüfung und Freigabe der Nutzungsdatendatei beschleunigt und für alle Beteiligten vereinfacht, sondern auch die Möglichkeiten eines Missbrauchs oder einer unbefugten Benutzung der Nutzungsdatendatei erheblich eingeschränkt. Mit einer erfindungsgemäß eingerichteten und betriebenen Nutzungsvorrichtung kann zu Gunsten des Lizenzgebers und des Lizenznehmers sichergestellt werden, dass mit der Produktionsanlage nur die vereinbarten lizenzgemäßen Produkte hergestellt werden können. Eine darüber hinausgehende und missbräuchliche Nutzung der Nutzungsdatendatei kann durch geeignete Maßnahmen der Nutzungsvorrichtung ausgeschlossen werden. So kann die Nutzungsvorrichtung beispielsweise so eingerichtet und betrieben werden, dass die Nutzungsdatendatei erst nach einer erfolgreichen Prüfung der Nutzungsberechtigung unmittelbar vor einem Produktionsprozess an die Produktionsanlage übermittelt und dort nur für die Dauer des Produktionsprozesses in einem flüchtigen Speicher gespeichert und genutzt wird, um nach einem Abschluss des Produktionsprozesses wieder automatisiert gelöscht zu werden.

Wenn die Nutzungsdatendatei zur Herstellung eines Produkts mit einer Produktionsanlage verwendet wird, kann mit der Nutzungsvorrichtung gegebenenfalls automatisiert vor, während oder nach einer Nutzung der Lizenz des Lizenzgebers eine neue Lizenzinformation und ein Lizenznutzungseintrag erzeugt werden, der in einem neuen Transaktionsblock mit dem Blockerzeugungsverfahren der Transaktionsdatenbank hinzugefügt wird, wobei der Lizenznutzungseintrag mindestens die Lizenzidentifikation des Lizenzvergabeeintrags und eine Nutzungsidentifikation enthält. Der Lizenznehmer muss lediglich die für die automatisierte Erstellung eines neuen Lizenznutzungseintrags erforderlichen Informationen in der Produktionsanlage hinterlegen, die ihrerseits über ein Datennetz auf die Transaktionsdatenbank zugreifen können muss. Während der Produktion kann dann die Produktionsanlage dann beispielsweise während oder nach jedem einzelnen Produktionsvorgang einen Lizenznutzungseintrag erzeugen und der Transaktionsdatenbank hinzufügen, ohne dass der Lizenznehmer aktiv eingreifen oder tätig werden müsste. Der von der Produktionsanlage erzeugte Lizenznutzungseintrag kann eine beliebige Variante der vorangehend beschriebenen Möglichkeiten für einen Lizenznutzungseintrag darstellen.

Wenn die Nutzungsdatendatei zur Herstellung eines Produkts mit einer Produktionsanlage verwendet wird, kann vor oder während der Herstellung des Produkts eine eindeutige Nutzungsseriennummer erzeugt werden, das Produkt mit der Nutzungsseriennummer gekennzeichnet werden und ein Lizenznutzungseintrag sowie zusätzlich eine weitere Lizenzinformation der Transaktionsdatenbank hinzugefügt werden, wobei die weitere Lizenzinformation einen Lizenzseriennummerneintrag und die nicht verschlüsselte eindeutige Nutzungsseriennummer enthält. Die Produktionsanlage kann in geeigneter Weise so eingerichtet und von dem Lizenznehmer mit den notwendigen Informationen versehen sein, dass die vorangehend beschriebenen Verfahrensschritte während der Herstellung eines Produkts automatisiert ablaufen können.

Nachfolgend werden einige Ausführungsbeispiele des Erfindungsgedankens näher erläutert, die in der Zeichnung exemplarisch dargestellt sind. Es zeigt:
Figur 1 eine schematische Darstellung einer Ausgangssituation einer Lizenzvereinbarung zwischen einem Lizenzgeber und einem Lizenznehmer, wobei die von dem Lizenzgeber vergebene Lizenz die Herstellung vor vier Produkteinheiten beinhaltet, die nach Vorgaben des Lizenzgebers durch den Lizenznehmer hergestellt werden sollen,
Figur 2 eine schematische Darstellung eines von dem Lizenzgeber erzeugten Lizenzvergabeeintrags,
Figur 3 eine schematische Darstellung eines von dem Lizenzgeber abweichend erzeugten Lizenzvergabeeintrags, bei dem die Dateiinformation mit einem Lizenzschlüssel verschlüsselt wurde,
Figur 4 eine schematische Darstellung einzelner Informationen, die von dem Lizenzgeber für den Lizenzvergabeeintrag erzeugt werden,
Figur 5 eine schematische Darstellung, wie die einzelnen Informationen von dem Lizenzgeber in den Lizenzvergabeeintrag überführt werden können,
Figur 6 eine schematische Darstellung eines von dem Lizenzgeber erzeugten Lizenzvergabeeintrags, der zusätzliche Informationen für den Lizenznehmer beinhaltet, und dessen Überführung in einen neuen Transaktionsblock, der mit einem erfindungsgemäßen Blockerzeugungsverfahren einer Transaktionsdatenbank hinzugefügt wird,
Figur 7 eine schematische Darstellung, wie der Lizenzgeber und der Lizenznehmer mit den in dem Lizenzvergabeeintrag enthaltenen Informationen eine Nutzungsdatendatei austauschen können, die für die Inanspruchnahme der von dem Lizenzgeber vergebenen Lizenzen benötigt wird,
Figur 8 eine schematische Darstellung, wie der Lizenznehmer einen Lizenznutzungseintrag und eine weitere Lizenzinformation mit dem Blockerzeugungsverfahren erzeugt und der dezentralen Transaktionsdatenbank hinzufügt,
Figur 9 eine schematische Darstellung, wie der Lizenznehmer eine erste Information für den von ihm erzeugten Lizenznutzungseintrag ermittelt,
Figur 10 eine schematische Darstellung, wie der Lizenznehmer eine zweite Information für den von ihm erzeugten Lizenznutzungseintrag ermittelt,
Figur 11 eine schematische Darstellung von einem Lizenznutzungseintrag und von einer weiteren Lizenzinformation, die von dem Lizenznehmer erzeugt und als elektronische Dokumentation in der Transaktionsdatenbank hinterlegt werden können,
Figur 12 eine schematische Darstellung der öffentlich sichtbaren Informationen und von einem Lizenzvergabeeintrag, von einem Lizenznutzungseintrag und von einer weiteren Lizenzinformation, die von dem Lizenzgeber und Lizenznehmer erzeugt und als elektronische Dokumentation in der Transaktionsdatenbank hinterlegt werden können, und
Figur 13 eine schematische Darstellung eines Prüfvorgangs, bei dem ein Dritter ausgehend von einer auf einem Produkt wiedergegebenen Lizenzseriennummer durch eine Überprüfung der dezentralen Transaktionsdatenbank feststellen kann, ob beziehungsweise dass zu dieser Lizenzseriennummer eine Lizenzinformation in der Transaktionsdatenbank hinterlegt ist.

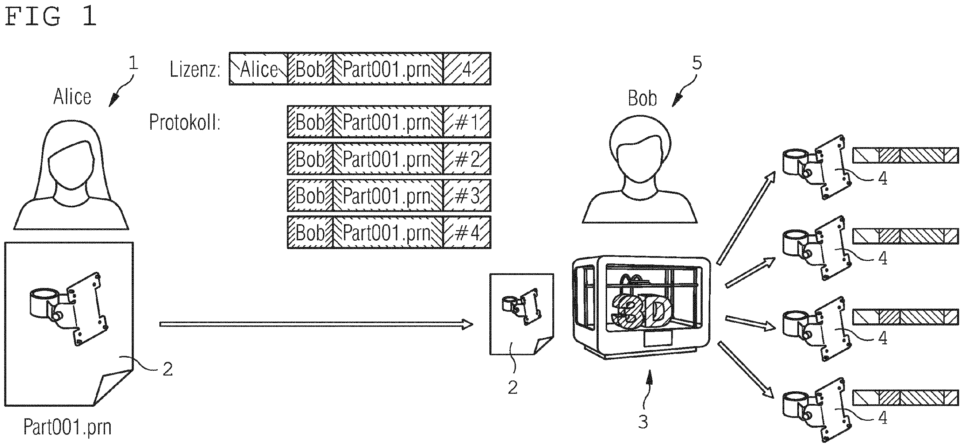

Bei der in Figur 1 exemplarisch dargestellten Ausgangssituation ist der im Folgenden auch aus "Alice" bezeichnete Lizenzgeber 1 im Besitz einer als "Part001.prn" bezeichneten Nutzungsdatendatei 2, die maschinenlesbare Informationen enthält, mit denen mit Hilfe eines 3D-Druckers 3 mehrere Exemplare 4 eines Produkts erzeugt werden können. Der im Folgenden als "Bob" bezeichnete Lizenznehmer 5 ist Besitzer des 3D-Druckers 3. Der Lizenzgeber 1 und der Lizenznehmer 5 schließen eine Lizenzvereinbarung, die es dem Lizenznehmer 5 ermöglichen soll, unter Nutzung der Nutzungsdatendatei 2 vier Exemplare 4 des durch die Nutzungsdatendatei 2 definierten Produkts mit seinem 3D-Drucker 3 herzustellen. Sowohl die Vergabe der Lizenz durch den Lizenzgeber 1 als auch die jeweilige Inanspruchnahme der Lizenz durch den Lizenznehmer 5 sollen als Lizenzinformationen elektronisch dokumentiert werden.

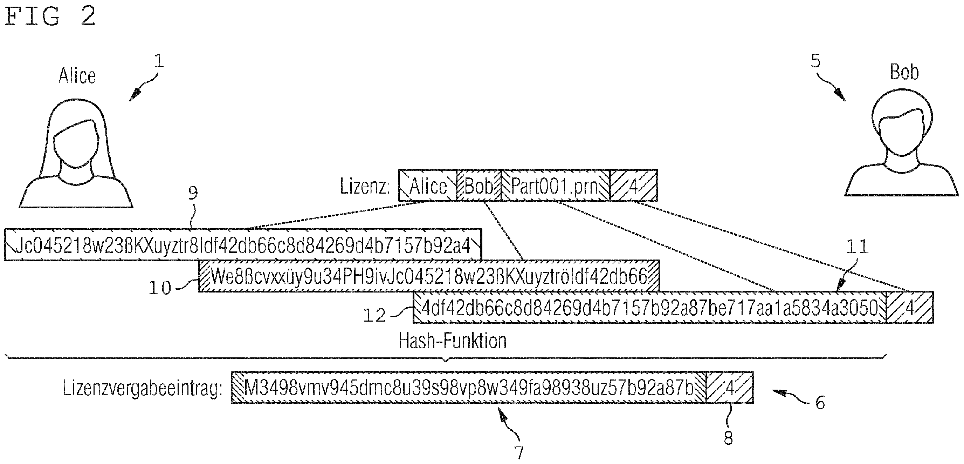

In Figur 2 ist schematisch dargestellt, dass ein von dem Lizenzgeber 1 erzeugter Lizenzvergabeeintrag 6 aus mehreren Informationen zusammengesetzt werden kann. Der in Figur 2 schematisch dargestellte Lizenzvergabeeintrag 6 weist eine Lizenzidentifikation 7 und eine Nutzungsbeschränkungsinformation 8 auf. Die Lizenzidentifikation 7 setzt sich zusammen aus einer Lizenzgeberidentifikation 9, einer Lizenznehmeridentifikation 10 und einer Dateiinformation 11. Die Dateiinformation 11 wird durch einen mit einem Hash-Algorithmus berechneten Hash-Wert 12 repräsentiert, der mit einem geeigneten Hash-Algorithmus aus der Nutzungsdatendatei 2 berechnet wird. Die Lizenzgeberidentifikation 9 und die Lizenznehmeridentifikation 10 können jeweils einem auch als "public key" bezeichneten öffentlichen Schlüssel des Lizenzgebers 1 bzw. des Lizenznehmers 5 entsprechen. Zu dem jeweiligen öffentlichen Schlüssel haben der Lizenzgeber 1 und der Lizenznehmer 5 jeweils einen auch als "persönlichen Schlüssel" oder "private key" bezeichneten privaten Schlüssel. Der öffentliche Schlüssel und der private Schlüssel können mit einem asymmetrischen Verschlüsselungsverfahren verwendet werden.

Die Lizenzidentifikation 7, die der Lizenzgeber 1 in dem in Figur 2 ausgeführten Ausführungsbeispiel erzeugt, besteht aus einem Hash-Wert, der mit einem Hash-Algorithmus aus der Lizenzgeberidentifikation 9, der Lizenznehmeridentifikation 10 und dem Hash-Wert 12 der Dateiinformation 11 berechnet wird. Die Nutzungsbeschränkungsinformation 8 ist unverschlüsselt und im Klartext lesbar in den Lizenzvergabeeintrag 6 aufgenommen.

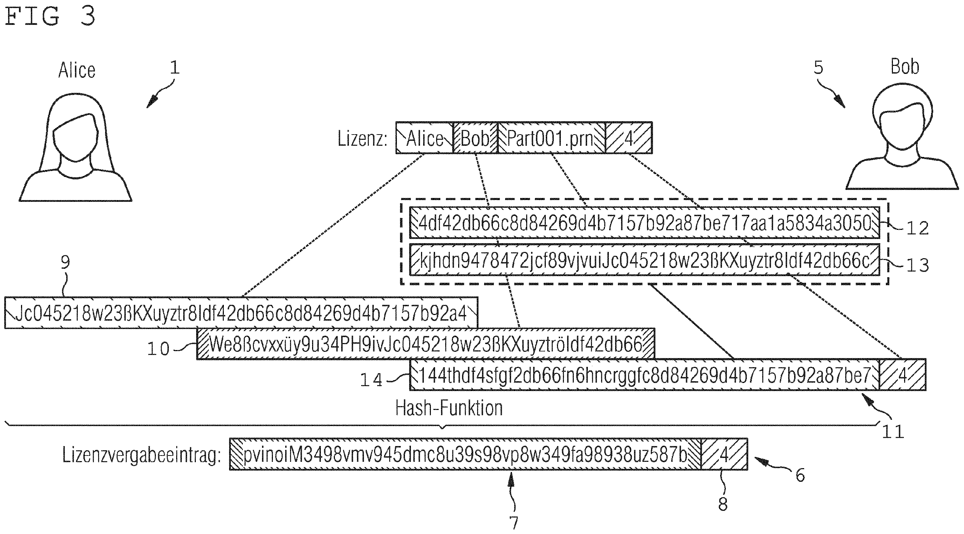

Aus Gründen der Sicherheit und im Hinblick darauf, dass der Lizenzgeber 1 und der Lizenznehmer 5 eventuell Informationen über die abgeschlossene Lizenzvereinbarung vertraulich behandeln wollen, kann es zweckmäßig sein, dass die Dateiinformation 11 zusätzlich verschlüsselt wird, bevor die Dateiinformation 11 in den Lizenzvergabeeintrag 6 mit aufgenommen wird. Ein entsprechendes Ausführungsbeispiel ist exemplarisch in Figur 3 dargestellt. Eine verschlüsselte Dateiinformation 11 kann dadurch erzeugt werden, dass der Hash-Wert 12 der Nutzungsdatendatei 2 mit einem vorab bereitgestellten Lizenzschlüssel 13 verschlüsselt und ein verschlüsselter Hash-Wert 14 erzeugt wird. Der verschlüsselte Hash-Wert 14 kann als verschlüsselte Dateiinformation 11 in die Lizenzidentifikation 7 aufgenommen und zu einem inhaltlich veränderten Lizenzvergabeeintrag 6 zusammengefasst werden.

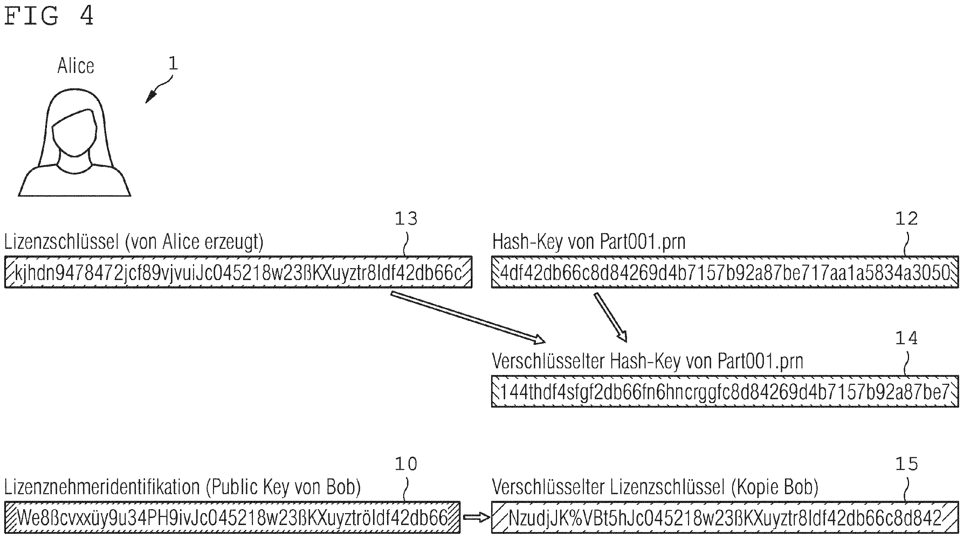

Der Lizenzschlüssel 13 ist zur Verwendung mit einem symmetrischen Verschlüsselungsverfahren vorgesehen und wird von dem Lizenzgeber 1 vorgegeben. In Figur 4 ist dargestellt, wie der Lizenzgeber 1 mit dem Lizenzschlüssel 13 den Hash-Wert 12 aus der Nutzungsdatendatei 2 verschlüsselt und dabei den verschlüsselten Hash-Wert 14 erzeugt. Damit der Lizenznehmer 5 den verschlüsselten Hash-Wert 14 entschlüsseln kann, muss der Lizenzschlüssel 13 dem Lizenznehmer 5 zur Verfügung gestellt werden. Dazu verschlüsselt der Lizenzgeber 1 den Lizenzschlüssel 13 mit dem öffentlichen Schlüssel des Lizenznehmers 5, der in diesem Ausführungsbeispiel seiner Lizenznehmeridentifikation 10 entspricht, und erzeugt einen für den Lizenznehmer 5 verschlüsselten Lizenzschlüssel 15, der in Figur 4 auch als "verschlüsselter Lizenzschlüssel (Kopie Bob)" bezeichnet ist. Der für den Lizenznehmer 5 verschlüsselte Lizenzschlüssel 15 muss dem Lizenznehmer 5 zur Verfügung gestellt werden.

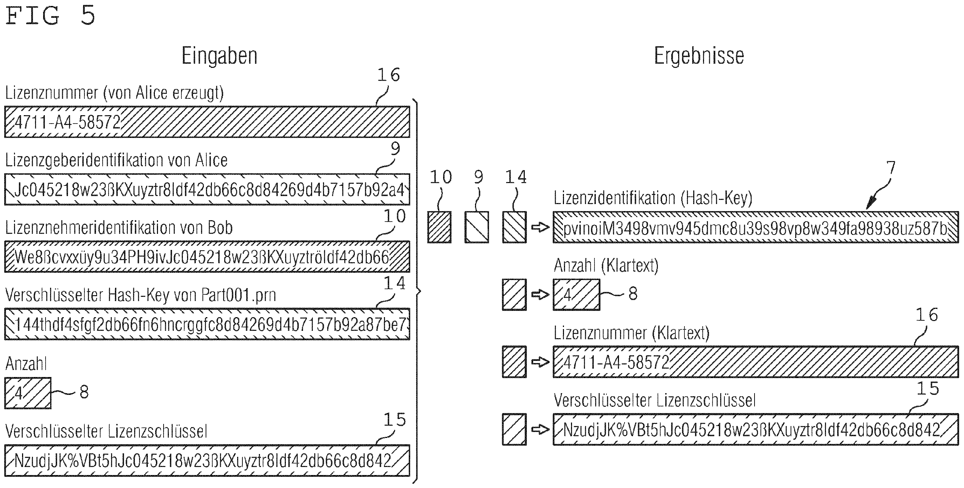

In Figur 5 wird schematisch ein mit weiteren Informationen versehener Lizenzvergabeeintrag 6 gezeigt. Von dem Lizenzgeber 1 wird neben den bereits beschriebenen Informationen eine Lizenznummer 16 erzeugt, die unverschlüsselt in den Lizenzvergabeeintrag 6 mit aufgenommen wird und einen von jedem erkennbaren Hinweis auf die zugrundeliegende Lizenzvereinbarung darstellt.

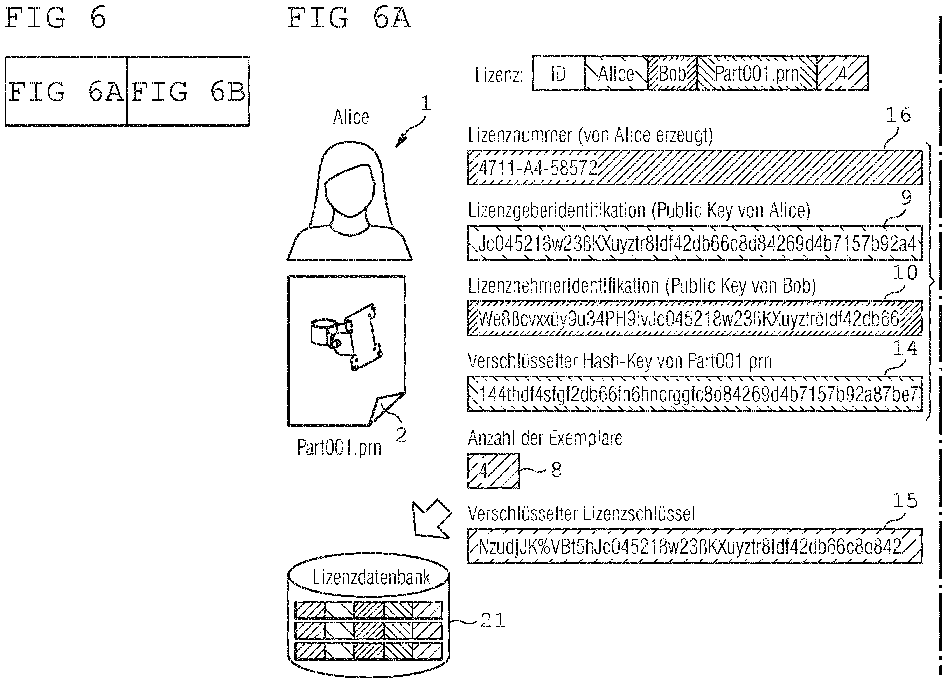

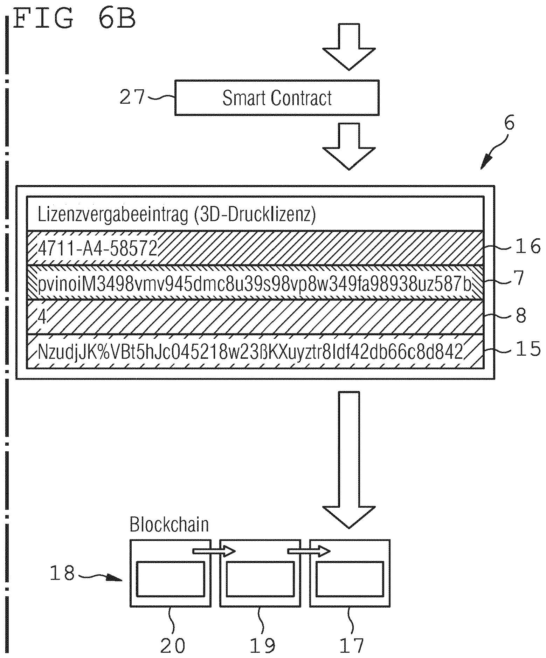

Der Lizenzvergabeeintrag 6 wird in einem Blockerzeugungsverfahren in einen neuen Transaktionsblock 17 umgewandelt und an eine auch als "Blockchain" bezeichnete dezentrale Transaktionsdatenbank 18 hinzugefügt. Dabei wird der neue Transaktionsblock 17 mit genau einem vorausgehenden Transaktionsblock 19 der Transaktionsdatenbank 18 verknüpft, so dass die Transaktionsdatenbank 18 durch eine Kette von Transaktionsblöcken 17, 19, 20 gebildet wird. Zusätzlich kann der Lizenzgeber 1 die von ihm erzeugten Lizenzinformationen auch in einer von dem Lizenzgeber 1 verwaltete elektronische Datenbank 21 abspeichern und archivieren. Diese Aspekte des erfindungsgemäßen Verfahrens sind schematisch in Figur 6 dargestellt. Dabei werden die für den Lizenzvergabeeintrag 6 benötigten Informationen sowie weitere Informationen des Lizenzgebers 1 an ein Software-Modul 27 übermittelt, mit welchem die Gültigkeit des Lizenzvergabeeintrags 6 und die Berechtigung des Lizenzgebers 1, diesen Lizenzvergabeeintrag 6 der Transaktionsdatenbank 18 hinzuzufügen, automatisiert überprüft wird. So kann mit dem Software-Modul 27 überprüft werden, ob die Informationen in dem Lizenzvergabeeintrag 6 mit der Lizenzgeberidentifikation 9 übereinstimmen und der Lizenzgeber 1 den Lizenzvergabeeintrag 6 veranlasst.

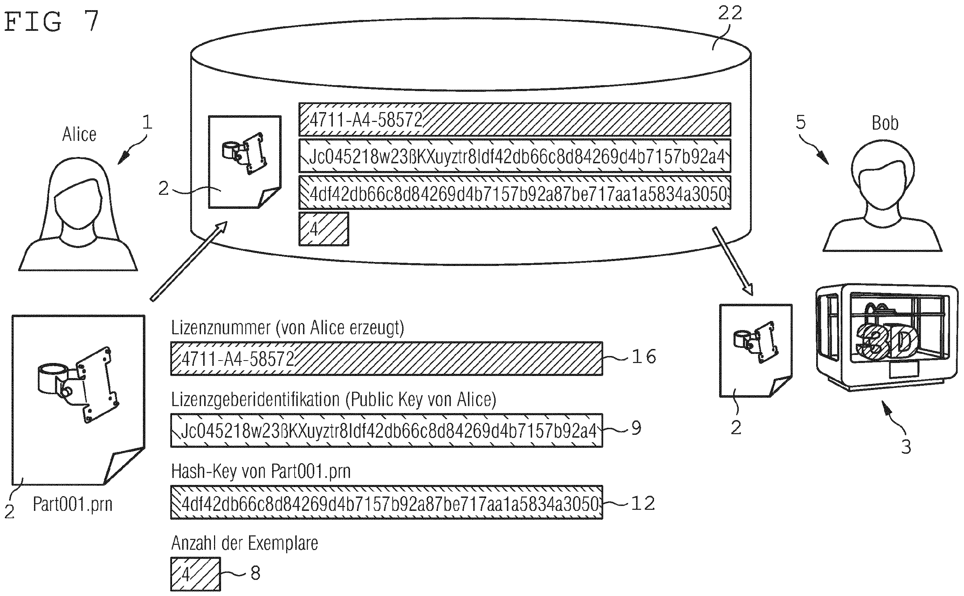

In Figur 7 ist schematisch gezeigt, dass für die Übermittlung der Nutzungsdatendatei 2 keine direkte Kommunikation zwischen dem Lizenzgeber 1 und dem Lizenznehmer 5 erforderlich ist, die ihrerseits im Hinblick auf die gewünschte Sicherheit und Vertraulichkeit mit einem erheblichen Aufwand verbunden wäre. Die Nutzungsdatendatei 2 kann auf einer externen und von einem Dritten verwalteten oder gehosteten Speichereinrichtung 22 von dem Lizenzgeber 1 hinterlegt werden. Die Speichereinrichtung 22 kann als eine sichere Austauschplattform ausgestaltet und betrieben werden. Der Lizenznehmer 5 erhält nur dann einen Zugriff auf die Nutzungsdatendatei 2, wenn er sich ordnungsgemäß identifiziert und dessen Berechtigung für einen Abruf der Nutzungsdatendatei 2 überprüft und bestätigt wurde. Der Lizenznehmer 5 kann dann die Nutzungsdatendatei 2 nutzen, um mit Hilfe seines 3D-Druckers 3 die lizenzgemäßen Exemplare 4 des lizensierten Produkts herzustellen.

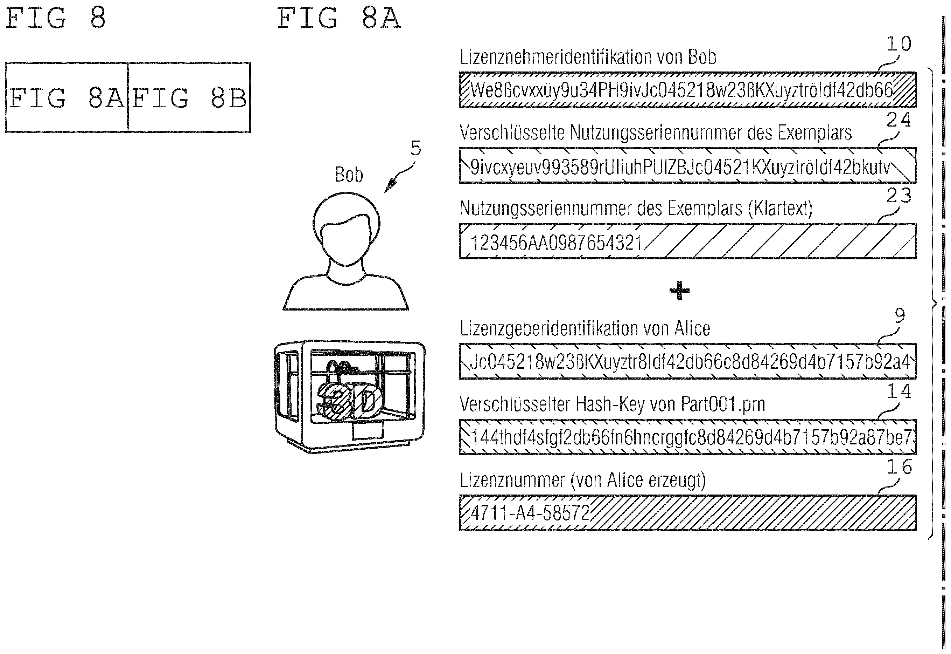

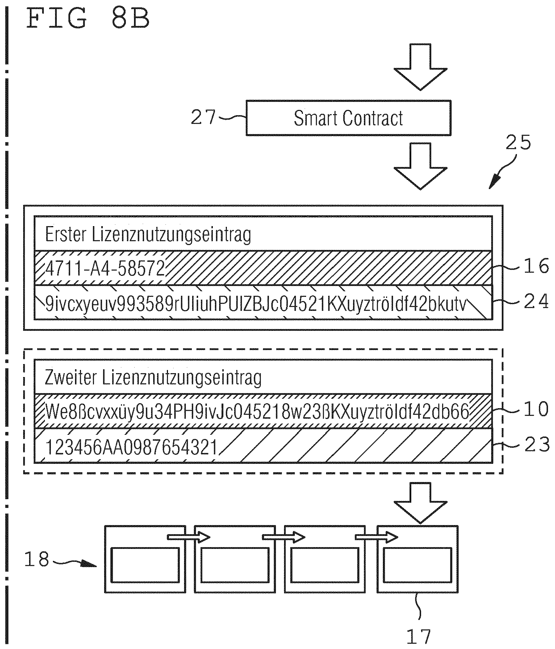

Dabei erzeugt der Lizenznehmer 5 für jedes lizenzgemäß hergestellte Exemplar 4 des Produkts eine Nutzungsseriennummer 23 sowie eine mit dem Lizenzschlüssel 13 verschlüsselte Nutzungsseriennummer 24. Der Lizenznehmer 5 erzeugt dann mit dem erfindungsgemäßen Verfahren einen ersten Lizenznutzungseintrag 25 für den Lizenzgeber 1 sowie einen zweiten Lizenznutzungseintrag 26 mit einer weiteren Lizenzinformation, die für Dritte bestimmt ist, wie es schematisch in Figur 8 gezeigt ist. Der erste Lizenznutzungseintrag 25 enthält die von dem Lizenzgeber 1 erzeugte Lizenznummer 16 und die verschlüsselte Nutzungsseriennummer 24. Da die verschlüsselte Nutzungsseriennummer 24 mit dem nur dem Lizenzgeber 1 und dem Lizenznehmer 5 bekannten Lizenzschlüssel 13 verschlüsselt wurde, kann nur der Lizenzgeber 1 die Nutzungsseriennummer 23 aus dem Lizenznutzungseintrag 25 ermitteln und über die Lizenznummer der zugrundeliegenden Lizenzvereinbarung zuordnen. Der Lizenznehmer 5 kann zur Verschlüsselung der Nutzungsseriennummer 23 auch den öffentlichen Schlüssel des Lizenzgebers 1 verwenden.

Der zweite Lizenznutzungseintrag 26 enthält die Nutzungsseriennummer 23 im Klartext sowie die Lizenznehmeridentifikation 10. Dritte können anhand der Nutzungsseriennummer 23, die auf dem von dem Lizenznehmer 5 hergestellten Exemplar 4 des Produkts wiedergegeben ist, den zweiten Lizenznutzungseintrag 26 in der Transaktionsdatenbank 18 identifizieren und dadurch feststellen, dass ein zweiter Lizenznutzungseintrag 26 in der Transaktionsdatenbank 18 hinterlegt ist. Zudem können Dritte über die Lizenznehmeridentifikation 10 Kontakt mit dem Lizenznehmer 5 aufnehmen und ergänzende Informationen zu dem lizenzgemäß hergestellten Exemplar 4 des Produkts erhalten.

Auch der erste Lizenznutzungseintrag 25 und der zweite Lizenznutzungseintrag 26 werden von dem Lizenznehmer 5 zusammen mit weiteren Informationen an das Software-Modul 27 übertragen, mit welchem über die dort hinterlegten Gültigkeitsprüfungen überprüft wird, ob sich die Lizenznutzungseinträge 25, 26 auf einen vorausgegangenen Lizenzvergabeeintrag 6 beziehen und ob die Lizenznutzungseinträge 25, 26 von dem Lizenznehmer 5 veranlasst sind. Dabei kann beispielsweise von dem Software-Modul 27 auch überprüft werden, ob aus den vorliegenden Informationen die ursprünglich vom Lizenzgeber 1 berechnete Lizenzidentifikation 7 berechenbar ist und übereinstimmt. Die Lizenznutzungseinträge 25, 26 werden nur dann in die Transaktionsdatenbank 18 eingetragen, wenn alle von dem Software-Modul 27 durchgeführten Gültigkeitsprüfungen fehlerfrei durchgeführt wurden.

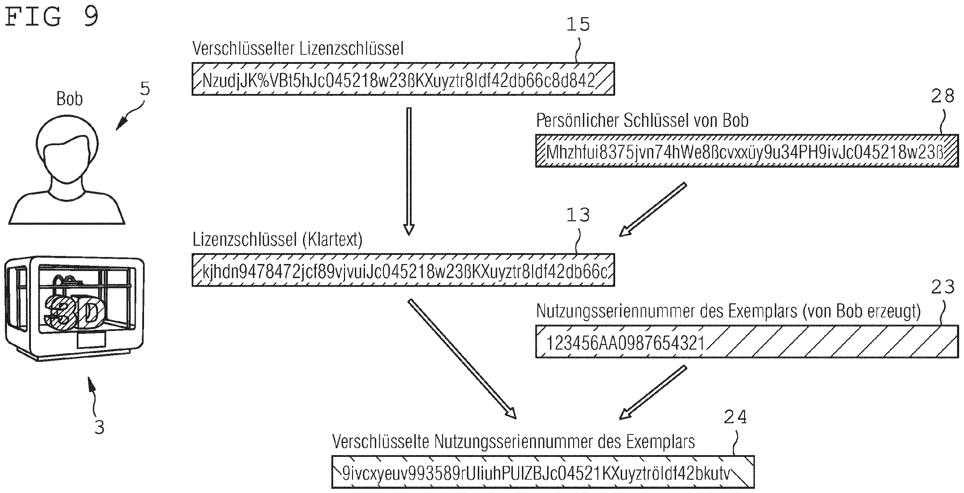

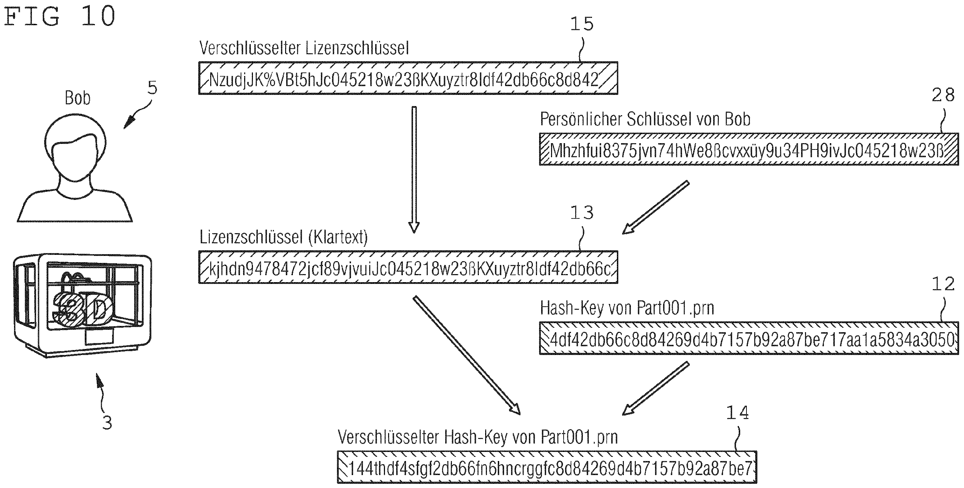

In den Figuren 9 und 10 wird schematisch gezeigt, wie der Lizenznehmer 5 aus den ihm von dem Lizenzgeber 1 zur Verfügung gestellten Informationen und aus seinem als "persönlicher Schlüssel von Bob" bezeichneten privaten Schlüssel 28 mit Hilfe des Lizenzschlüssels 13 die verschlüsselte Nutzungsseriennummer 24 und den verschlüsselten Hash-Wert 14 der Nutzungsdatendatei 2 erzeugen kann.

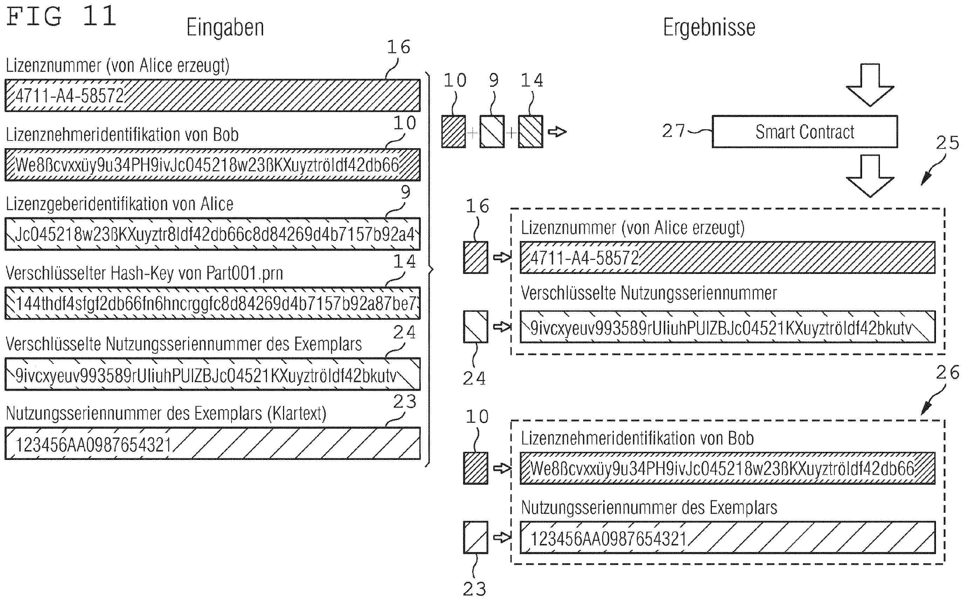

Gemäß Figur 11 enthält der von dem Lizenznehmer 5 erzeugte erste Lizenznutzungseintrag 25 als Lizenzidentifikation die von dem Lizenzgeber 1 vorgegebene Lizenznummer 16 und die verschlüsselte Nutzungsseriennummer 24, die von dem Lizenznehmer 5 aus den ihm bekannten Informationen ermittelt wurden. Dem ersten Lizenznutzungseintrag 25 ist lediglich ein einziges Exemplar 4 zugeordnet, so dass dies einer Lizenznutzungsinformation von "1" entspricht und der Lizenzgeber 1 darüber informiert wird, das ein Exemplar 4 hergestellt wurde. Es könnten auch mehrere Exemplare 4 jeweils in dem ersten und zweiten Lizenznutzungseintrag 25, 26 zusammengefasst werden, wobei dann eine entsprechende Lizenznutzungsinformation zugeordnet ist.

Die Lizenzgeberidentifikation 9, die Lizenznehmeridentifikation 10 und der verschlüsselte Hash-Wert 14 der Dateiinformation 11 werden von dem Lizenznehmer 5 jeweils an das Software-Modul 27 übermittelt und dazu verwendet, die von dem Software-Modul 27 automatisiert durchgeführte Gültigkeitsprüfung zu bestehen. Der erste Lizenznutzungseintrag 25 des Lizenznehmers 5 beinhaltet die Lizenznummer 16 als Lizenzidentifikation und die verschlüsselte Nutzungsseriennummer 24, sodass der Lizenzgeber 1 nach einer von ihm mit dem Lizenzschlüssel 13 durchgeführten Entschlüsselung die Nutzungsseriennummer 23 im Klartext entnehmen kann. Kein Dritter kann dem ersten Lizenznutzungseintrag 25 die Nutzungsseriennummer 23 im Klartext entnehmen, da der hierfür benötigte Lizenzschlüssel 13 nicht bekannt ist.

Der zweite Lizenznutzungseintrag 26 enthält keine Lizenzidentifikation und damit auch keinen Hinweis auf die Lizenzvereinbarung und den Lizenzgeber 1, aber die Lizenznehmeridentifikation 10 und die Nutzungsseriennummer 23 im Klartext. Jeder Dritte mit Zugriff auf die Transaktionsdatenbank 18 kann anhand der Nutzungsseriennummer 23 den zweiten Lizenznutzungseintrag 26 identifizieren.

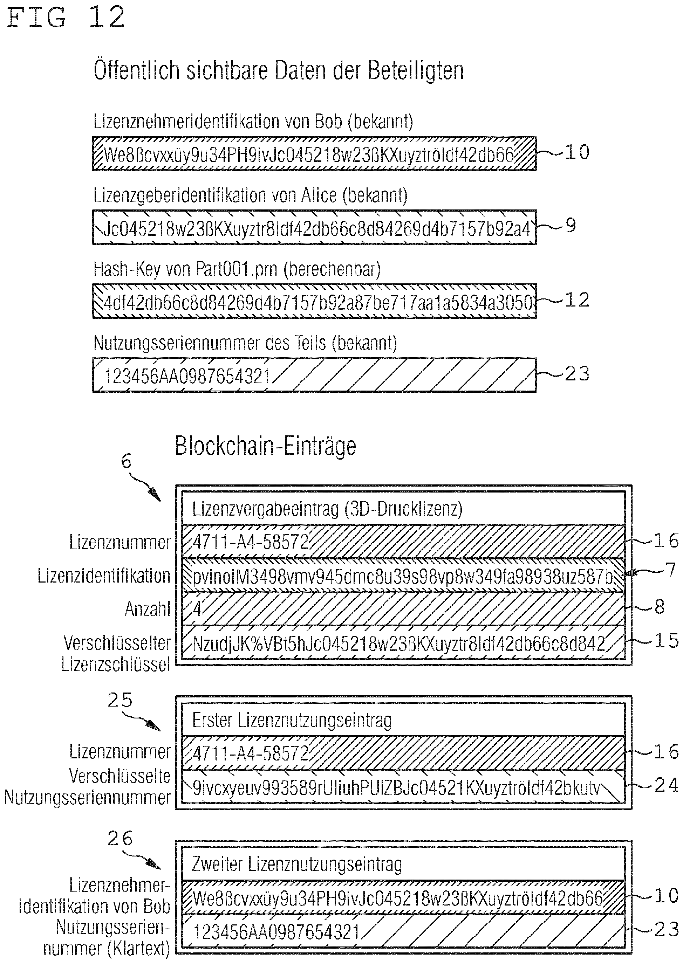

In der Figur 12 sind schematisch die öffentlich sichtbaren Informationen sowie der von dem Lizenzgeber 1 erzeugte Lizenzvergabeeintrag 6 und der von dem Lizenznehmer 5 erzeugte erste Lizenznutzungseintrag 25 und der zweite Lizenznutzungseintrag 26 gezeigt.

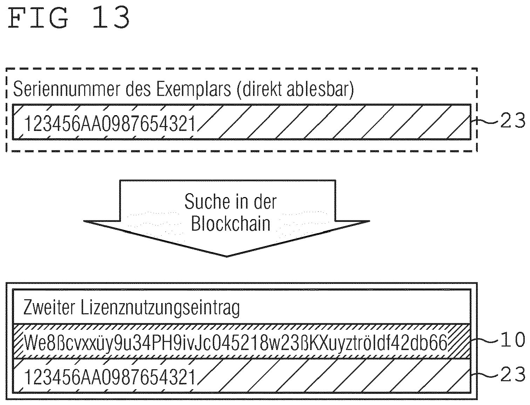

In Figur 13 ist lediglich schematisch dargestellt, dass sich ein beliebiger Dritter anhand der Nutzungsseriennummer 23, die beispielsweise auf dem von dem Lizenznehmer 5 hergestellten Exemplar 4 wiedergegeben und damit für den Dritten erkennbar ist, Informationen darüber verschaffen kann, dass eine Lizenzvereinbarung zu diesem Exemplar 4 existiert. Dazu muss der Dritte die gesamte Transaktionsdatenbank 18 mit den einzelnen Transaktionsblöcken der Transaktionsdatenbank 18 durchsehen und einen zweiten Lizenznutzungseintrag 26 identifizieren, in welchem die Nutzungsseriennummer 23 im Klartext hinterlegt ist. Wenn ein solcher Lizenznutzungseintrag 26 mit der gesuchten Nutzungsseriennummer 23 vorhanden ist, ist der Nachweis erbracht, dass die Nutzungsseriennummer 23 zu einer rechtmäßigen Lizenz gehört. In diesem zweiten Lizenznutzungseintrag 26 ist auch die Lizenznehmeridentifikation 10 hinterlegt, so dass der Dritte mit dem Lizenznehmer 5 in Kontakt treten und weitere Informationen abrufen kann.

### Bezugszeichenliste

- 1.: Lizenzgeber
- 2.: Nutzungsdatendatei
- 3.: 3D-Drucker
- 4.: Exemplar eines Produkts
- 5.: Lizenznehmer
- 6.: Lizenzvergabeeintrag
- 7.: Lizenzidentifikation
- 8.: Nutzungsbeschränkungsinformation
- 9.: Lizenzgeberidentifikation
- 10.: Lizenznehmeridentifikation
- 11.: Dateiinformation
- 12.: Hash-Wert der Nutzungsdatendatei
- 13.: Lizenzschlüssel
- 14.: Verschlüsselter Hash-Wert
- 15.: Verschlüsselter Lizenzschlüssel
- 16.: Lizenznummer
- 17.: Neuer Transaktionsblock
- 18.: Transaktionsdatenbank
- 19.: Vorausgehender Transaktionsblock
- 20.: Alter Transaktionsblock
- 21.: Datenbank des Lizenzgebers
- 22.: Externe Speichereinrichtung
- 23.: Nutzungsseriennummer
- 24.: Verschlüsselte Nutzungsseriennummer
- 25.: Erster Lizenznutzungseintrag
- 26.: Zweiter Lizenznutzungseintrag
- 27.: Software-Modul
- 28.: Privater Schlüssel des Lizenznehmers

## Patentansprüche

1. Verfahren zur elektronischen Dokumentation von Lizenzinformationen über eine Vergabe einer Lizenz und über eine Inanspruchnahme dieser Lizenz in einem Netzwerk mehrerer datenübertragend miteinander verbindbarer elektronischer Datenverarbeitungseinrichtungen, wobei die Lizenzinformationen in einer dezentralen Transaktionsdatenbank (18) mit einer Blockchain-Technologie verwaltet werden, wobei die Transaktionsdatenbank (18) eine Kette von Transaktionsblöcken (19, 20) enthält, und wobei der Transaktionsdatenbank (18) neue Lizenzinformationen in neuen Transaktionsblöcken (17) durch ein Blockerzeugungsverfahren hinzugefügt werden können, wobei in dem Blockerzeugungsverfahren
- zunächst eine mit Informationen über einen vorausgehenden Transaktionsblock (19) der Transaktionsdatenbank (18) erzeugte Ausgangsblockinformation und ein Integritätskriterium für die Hinzufügung des neuen Transaktionsblocks (17) in die Transaktionsdatenbank (18) aus dem Netzwerk beschafft wird, wobei
- anschließend ein neuer Transaktionsblock (17) erzeugt wird, der das Integritätskriterium erfüllt und der mindestens die Ausgangsblockinformation, die neue Lizenzinformation und eine Integritätsinformation enthält, und wobei
- schließlich der neue Transaktionsblock (17) der Transaktionsdatenbank (18) hinzugefügt wird,
wobei ein Lizenzgeber (1) bei einer Lizenzvergabe an einen Lizenznehmer (5) eine neue Lizenzinformation mit einem Lizenzvergabeeintrag (6) erzeugt, der in einem neuen Transaktionsblock (17) mit dem Blockerzeugungsverfahren der Transaktionsdatenbank (18) hinzugefügt wird, wobei der Lizenzvergabeeintrag (6) mindestens eine Lizenzidentifikation (7) enthält,
**dadurch gekennzeichnet, dass** der Lizenznehmer (5) vor, während oder nach einer Nutzung der Lizenz des Lizenzgebers (1) eine neue Lizenzinformation mit einem Lizenznutzungseintrag (25) erzeugt, der in einem neuen Transaktionsblock (17) mit dem Blockerzeugungsverfahren der Transaktionsdatenbank (18) hinzugefügt wird, wobei der Lizenznutzungseintrag (25) mindestens die Lizenzidentifikation (7) des Lizenzvergabeeintrags (6) und eine Nutzungsidentifikation enthält, dass der Lizenznutzungseintrag (25) eine Lizenznutzungsinformation enthält und dass die Lizenznutzungsinformation in dem Lizenznutzungseintrag (25) eine eindeutige Nutzungsseriennummer (23) enthält.

2. Verfahren nach Anspruch 1, **dadurch gekennzeichnet, dass** der Lizenzvergabeeintrag (6) ein von dem Lizenznutzungseintrag (25) abweichendes Datenformat aufweist.

3. Verfahren nach Anspruch 1 oder Anspruch 2, **dadurch gekennzeichnet, dass** der Lizenzvergabeeintrag (6) einen mit einem öffentlichen Schlüssel des Lizenznehmers (5) verschlüsselten Lizenzschlüssel (15) enthält, so dass der Lizenzgeber (1) und der Lizenznehmer (5) mit dem Lizenzschlüssel (13) verschlüsselte Informationen erzeugen und entschlüsseln können.

4. Verfahren nach einem der vorangehenden Ansprüche, **dadurch gekennzeichnet, dass** die Nutzungsinformation in dem Lizenznutzungseintrag (25) mit dem Lizenzschlüssel (13) verschlüsselt ist.

5. Verfahren nach einem der vorangehenden Ansprüche, **dadurch gekennzeichnet, dass** der Lizenzvergabeeintrag (6) eine Dateiinformation (11) enthält, die eine Nutzungsdatendatei (2) repräsentiert.

6. Verfahren nach Anspruch 5, **dadurch gekennzeichnet, dass** die Dateiinformation (11) mit dem Lizenzschlüssel (13) verschlüsselt ist.

7. Verfahren nach einem der vorangehenden Ansprüche, **dadurch gekennzeichnet, dass** der Lizenzvergabeeintrag (6) eine Lizenzgeberidentifikation (9) und eine Lizenznehmeridentifikation (10) enthält.

8. Verfahren nach Anspruch 7, **dadurch gekennzeichnet, dass** nur der durch die Lizenznehmeridentifikation (10) identifizierte Lizenznehmer (5) die Berechtigung erhält, einen zulässigen Lizenznutzungseintrag (25) zu erzeugen.

9. Verfahren nach Anspruch 8, **dadurch gekennzeichnet, dass** die Berechtigung des Lizenznehmers (5) zur Erzeugung eines zulässigen Lizenznutzungseintrags (25) automatisiert bei der Erzeugung eines neuen Transaktionsblocks (17) überprüft und die Erzeugung verweigert wird, wenn bei einer Überprüfung der Lizenznehmeridentifikation (10) keine Berechtigung nachgewiesen werden kann.

10. Verfahren nach einem der vorangehenden Ansprüche, **dadurch gekennzeichnet, dass** die Lizenzidentifikation (7) ein mit einem Hash-Algorithmus berechneter Hashwert ist, der ausgehend von mindestens der Lizenzgeberidentifikation (9), der Lizenznehmeridentifikation (10) und der Dateiinformation (11) ermittelt wurde.

11. Verfahren nach einem der vorangehenden Ansprüche 1 bis 7, **dadurch gekennzeichnet, dass** die Lizenzidentifikation (7) ein mit einem Hash-Algorithmus berechneter Hashwert ist, der ausgehend von mindestens der Lizenzgeberidentifikation (9), der Lizenznehmeridentifikation (10) und der verschlüsselten Dateiinformation (11) ermittelt wurde.

12. Verfahren nach einem der vorangehenden Ansprüche, **dadurch gekennzeichnet, dass** der Lizenzvergabeeintrag (6) eine Nutzungsbeschränkungsinformation (8) enthält.

13. Verfahren nach einem der vorangehenden Ansprüche, **dadurch gekennzeichnet, dass** die Nutzungsseriennummer (23) mit dem Lizenzschlüssel (13) verschlüsselt ist.

14. Verfahren nach einem der vorangehenden Ansprüche, **dadurch gekennzeichnet, dass** der Lizenznehmer (5) zu jedem Lizenznutzungseintrag (25) zusätzlich eine weitere Lizenzinformation (26) der Transaktionsdatenbank (18) hinzufügt, wobei die weitere Lizenzinformation (26) einen Lizenzseriennummerneintrag beinhaltet, der mindestens die Lizenznehmeridentifikation (10) und die nicht verschlüsselte eindeutige Nutzungsseriennummer (23) enthält.

15. Verfahren nach einem der vorangehenden Ansprüche, **dadurch gekennzeichnet, dass** jeder neue Transaktionsblock (17), der einen Lizenzvergabeeintrag (6) oder einen Lizenznutzungseintrag (25) enthält, mit Hilfe eines auf einem Datenverarbeitungssystem ausgeführten Software-Moduls der Transaktionsdatenbank (18) hinzugefügt wird, wobei mit dem Software-Modul automatisiert überprüft wird, ob der Lizenzvergabeeintrag (6) von dem Lizenzgeber (1) bzw. der Lizenznutzungseintrag (25) von dem Lizenznehmer (5) veranlasst wird, und ob der Lizenznutzungseintrag (25) sich auf einen vorausgegangenen Lizenzvergabeeintrag (6) bezieht.

16. Verfahren zur automatisierten Freigabe einer Nutzungsdatendatei (2) zur Nutzung in einer mit dem Netzwerk verbindbaren Datenverarbeitungseinrichtung einer Nutzungsvorrichtung, wobei eine Freigabeberechtigung für eine Berechtigungsanfrage aus einer elektronischen Dokumentation von Lizenzinformationen abgeleitet wird, die mit einem in den Ansprüchen 1 bis 15 beschriebenen Verfahren zur elektronischen Dokumentation von Lizenzinformationen über eine Vergabe einer Lizenz und über eine Inanspruchnahme dieser Lizenz in einem Netzwerk mehrerer datenübertragend miteinander verbindbarer elektronischer Datenverarbeitungseinrichtungen verwaltet wird, wobei die Lizenzinformationen mindestens einen Lizenzvergabeeintrag (6) beinhalten,
- wobei in einem Berechtigungsabfrageschritt in der Transaktionsdatenbank (18) diejenigen Lizenzinformationen ermittelt und als Berechtigungsinformationen ausgelesen werden, die über die Dateiinformation (11) der freizugebenden Nutzungsdatendatei (2) zugeordnet sind, oder die eine vorab in der Datenverarbeitungseinrichtung der Nutzungsvorrichtung hinterlegte Lizenzidentifikation (7) enthalten,
- und wobei in einem nachfolgenden Berechtigungsprüfungsschritt eine Berechtigungsfreigabe ermittelt wird, indem überprüft wird, ob die Berechtigungsanfrage eine Nutzung der Nutzungsdatendatei betrifft, die nicht durch die Nutzungsbeschränkungsinformation ausgeschlossen ist oder anhand der Lizenznutzungsinformationen bereits durchgeführt wurde und erschöpft ist,
- und die Nutzungsdatendatei für eine Nutzung mit der Nutzungsvorrichtung freigegeben wird, falls die Berechtigungsfreigabe festgestellt ist.

17. Verfahren nach Anspruch 16, **dadurch gekennzeichnet, dass** mit der Nutzungsvorrichtung vor, während oder nach einer Nutzung der Lizenz des Lizenzgebers (1) eine neue Lizenzinformation mit einem Lizenznutzungseintrag (25) erzeugt wird, der in einem neuen Transaktionsblock (17) mit dem Blockerzeugungsverfahren der Transaktionsdatenbank (18) hinzugefügt wird, wobei der Lizenznutzungseintrag (25) mindestens die Lizenzidentifikation (7) des Lizenzvergabeeintrags (6) und eine Nutzungsidentifikation enthält.

18. Verfahren nach Anspruch 16 oder Anspruch 17, **dadurch gekennzeichnet, dass** mit der Nutzungsvorrichtung ein Produkt hergestellt wird, dass vor oder während der Herstellung des Produkts eine eindeutige Nutzungsseriennummer (23) erzeugt wird, dass das Produkt mit der Nutzungsseriennummer (23) gekennzeichnet wird und dass der Lizenznehmer (5) einen Lizenznutzungseintrag (25) und zusätzlich eine weitere Lizenzinformation (26) der Transaktionsdatenbank (18) hinzufügt, wobei die weitere Lizenzinformation (26) einen Lizenzseriennummerneintrag beinhaltet, der mindestens die Lizenznehmeridentifikation (10) und die nicht verschlüsselte eindeutige Nutzungsseriennummer (23) enthält.

## Claims

1. Method for electronically documenting licence information regarding granting of a licence and regarding use of this licence in a network of a plurality of electronic data-processing apparatuses that can be interconnected in a data-transferring manner, wherein the licence information is managed in a decentralised transaction database (18) using blockchain technology, wherein the transaction database (18) contains a chain of transaction blocks (19, 20), and wherein new licence information can be added to the transaction database (18) in new transaction blocks (17) by means of a block-generating method, wherein, in the block-generating method,
- first, a piece of output-block information generated using information regarding a preceding transaction block (19) from the transaction database (18) and an integrity criterion for the addition of the new transaction block (17) to the transaction database (18) are obtained from the network, wherein,
- subsequently, a new transaction block (17) is generated which fulfils the integrity criterion and contains the at least one piece of output-block information, the new licence information and a piece of integrity information, and wherein,
- finally, the new transaction block (17) is added to the transaction database (18),
wherein, when granting a licence to a licensee (5), a licenser (1) generates a new piece of licence information with a licence-granting entry (6), which is added to the transaction database (18) in a new transaction block (17) using the block-generating method, wherein the licence-granting entry (6) contains at least one licence identifier (7),
**characterised in that**, before, during or after use of the licence granted by the licenser (1), the licensee (5) generates a new piece of licence information with a licence-use entry (25), which is added to the transaction database (18) in a new transaction block (17) using the block-generating method, wherein the licence-use entry (25) contains at least the license identifier (7) of the licence-granting entry (6) and a use identifier, **in that** the licence-use entry (25) contains a piece of licence-use information and **in that** the licence-use information contains a unique use serial number (23) in the licence-use entry (25).

2. Method according to claim 1, **characterised in that** the licence-granting entry (6) has a data format that is different from the licence-use entry (25).

3. Method according to claim 1 or claim 2, **characterised in that** the licence-granting entry (6) contains a licence key (15) encrypted with a public key of the licensee (5), such that the licenser (1) and the licensee (5) can generate and decrypt encrypted information using the licence key (13).

4. Method according to any of the preceding claims, **characterised in that** the use information in the licence-use entry (25) is encrypted with the licence key (13).

5. Method according to any of the preceding claims, **characterised in that** the licence-granting entry (6) contains a piece of file information (11) which represents a use-data file (2).

6. Method according to claim 5, **characterised in that** the file information (11) is encrypted with the licence key (13).

7. Method according to any of the preceding claims, **characterised in that** the licence-granting entry (6) contains a licenser identifier (9) and a licensee identifier (10).

8. Method according to claim 7, **characterised in that** only the licensee (5) identified by the licensee identifier (10) receives the authorisation to generate a permissible licence-use entry (25).

9. Method according to claim 8, **characterised in that** the authorisation of the licensee (5) to generate a permissible licence-use entry (25) is verified in an automated manner when a new transaction block (17) is generated and the generation is denied if no authorisation can be found during verification of the licensee identifier (10).

10. Method according to any of the preceding claims, **characterised in that** the licence identifier (7) is a hash value which is calculated using a hash algorithm and has been determined proceeding from at least the licenser identifier (9), the licensee identifier (10) and the file information (11) .

11. Method according to any of the preceding claims 1 to 7, **characterised in that** the licence identifier (7) is a hash value which is calculated using a hash algorithm and has been determined proceeding from at least the licenser identifier (9), the licensee identifier (10) and the encrypted file information (11).

12. Method according to any of the preceding claims, **characterised in that** the licence-granting entry (6) contains a piece of use-restriction information (8).

13. Method according to any of the preceding claims, **characterised in that** the use serial number (23) is encrypted with the licence key (13).

14. Method according to any of the preceding claims, **characterised in that** the licensee (5) additionally adds a further piece of licence information (26) to the transaction database (18) for each licence-use entry (25), wherein the further piece of licence information (26) contains a licence serial-number entry, which contains at least the licensee identifier (10) and the non-encrypted unique use serial number (23) .

15. Method according to any of the preceding claims, **characterised in that** each new transaction block (17), which contains a licence-granting entry (6) or a licence-use entry (25), is added to the transaction database (18) by means of a software module executed on a data-processing system, wherein the software module verifies, in an automated manner, whether the licence-granting entry (6) is initiated by the licenser (1) or the licence-use entry (25) by the licensee (5) and whether the licence-use entry (25) relates to a preceding licence-granting entry (6).

16. Method for the automated release of a use-data file (2) for use in a data-processing apparatus of a use device that can be connected to the network, wherein release authorisation for an authorisation request is derived from electronic documentation of licence information, which is managed using a method described in claims 1 to 15 for electronically documenting licence information regarding granting of a licence and regarding use of this licence in a network of a plurality of electronic data-processing apparatuses that can be interconnected in a data-transferring manner, wherein the licence information contains at least one licence-granting entry (6),
- wherein, in an authorisation-request step in the transaction database (18), the licence information which is allocated to the use-data file (2) via the file information (11) or contains a licence identifier (7) that was previously stored in the data-processing apparatus of the use device is determined and read out as authorisation information,
- and wherein, in a subsequent authorisation-verification step, authorisation release is determined by verifying whether the authorisation request relates to a use of the use-data file that is not excluded by the use-restriction information or has already been performed and exhausted on the basis of the license-use information,
- and the use-data file is released for use with the use device if the authorisation release is determined.

17. Method according to claim 16, **characterised in that**, by means of the use device, before, during or after use of the licence granted by the licenser (1), a new piece of licence information is generated with a licence-use entry (25), which is added to the transaction database (18) in a new transaction block (17) using the block-generating method, wherein the licence-use entry (25) contains at least the license identifier (7) of the licence-granting entry (6) and a use identifier.

18. Method according to claim 16 or claim 17, **characterised in that** a product is produced by means of the use device, **in that** a unique use serial number (23) is generated before or during the production of the product, **in that** the product is labelled with the use serial number (23) and **in that** the licensee (5) adds a licence-use entry (25) and additionally a further piece of licence information (26) to the transaction database (18), wherein the further piece of licence information (26) contains a licence serial-number entry, which contains at least the licensee identifier (10) and the non-encrypted unique use serial number (23).

## Revendications

1. Procédé de documentation électronique d'informations de licence concernant une concession d'une licence et concernant une utilisation de ladite licence dans un réseau de plusieurs équipements de traitement de données électroniques pouvant être reliés les uns aux autres avec transmission de données, dans lequel les informations de licence sont gérées dans une base de données de transactions (18) décentralisée avec une technologie de chaîne de blocs, dans lequel la base de données de transactions (18) contient une chaîne de blocs de transaction (19, 20), et dans lequel de nouvelles informations de licence peuvent être ajoutées à la base de données de transactions (18) dans de nouveaux blocs de transaction (17) par un procédé de génération de blocs, dans lequel dans le procédé de génération de blocs
- d'abord une information de bloc de départ générée avec des informations concernant un bloc de transaction (19) précédent de la base de données de transactions (18) et un critère d'intégrité pour l'ajout du nouveau bloc de transaction (17) dans la base de données de transactions (18) sont obtenus du réseau, dans lequel
- puis un nouveau bloc de transaction (17) est généré, lequel remplit le critère d'intégrité et qui contient au moins l'information de bloc de départ, la nouvelle information de licence et une information d'intégrité,
et dans lequel
- pour finir le nouveau bloc de transaction (17) est ajouté à la base de données de transactions (18),
dans lequel un donneur de licence (1) génère lors d'une concession de licence à un preneur de licence (5) une nouvelle information de licence avec une entrée de concession de licence (6), qui est ajoutée dans un nouveau bloc de transaction (17) avec le procédé de génération de blocs à la base de données de transactions (18), dans lequel l'entrée de concession de licence (6) contient au moins une identification de licence (7),
**caractérisé en ce que** le preneur de licence (5) génère, avant, pendant ou après une utilisation de la licence du donneur de licence (1), une nouvelle information de licence avec une entrée d'utilisation de licence (25), qui est ajoutée dans un nouveau bloc de transaction (17) avec le procédé de génération de blocs à la base de données de transactions (18), dans lequel l'entrée d'utilisation de licence (25) contient au moins l'identification de licence (7) de l'entrée de concession de licence (6) et une identification d'utilisation, que l'entrée d'utilisation de licence (25) contient une information d'utilisation de licence et que l'information d'utilisation de licence contient dans l'entrée d'utilisation de licence (25) un numéro de série d'utilisation (23) univoque.

2. Procédé selon la revendication 1, **caractérisé en ce que** l'entrée de concession de licence (6) présente un format de données divergeant de l'entrée d'utilisation de licence (25).

3. Procédé selon la revendication 1 ou la revendication 2, **caractérisé en ce que** l'entrée de concession de licence (6) contient une clé de licence (15) cryptée avec une clé publique du preneur de licence (5) de sorte que le donneur de licence (1) et le preneur de licence (5) peuvent générer et décrypter des informations cryptées avec la clé de licence (13).

4. Procédé selon l'une quelconque des revendications précédentes, **caractérisé en ce que** l'information d'utilisation est cryptée dans l'entrée d'utilisation de licence (25) avec la clé de licence (13).

5. Procédé selon l'une quelconque des revendications précédentes, **caractérisé en ce que** l'entrée de concession de licence (6) contient une information de fichier (11), qui représente un fichier de données d'utilisation (2).

6. Procédé selon la revendication 5, **caractérisé en ce que** l'information de fichier (11) est cryptée avec la clé de licence (13).

7. Procédé selon l'une quelconque des revendications précédentes, **caractérisé en ce que** l'entrée de concession de licence (6) contient une identification de donneur de licence (9) et une identification de preneur de licence (10).

8. Procédé selon la revendication 7, **caractérisé en ce que** seulement le preneur de licence (5) identifié par l'identification de preneur de licence (10) obtient l'autorisation de générer une entrée d'utilisation de licence (25) admise.

9. Procédé selon la revendication 8, **caractérisé en ce que** l'autorisation du preneur de licence (5) à générer une entrée d'utilisation de licence (25) admise est vérifiée de manière automatisée lors de la génération d'un nouveau bloc de transaction (17) et la génération est refusée si aucune autorisation ne peut pas être démontrée lors d'une vérification de l'identification de preneur de licence (10).

10. Procédé selon l'une quelconque des revendications précédentes, **caractérisé en ce que** l'identification de licence (7) est une valeur de hachage calculée avec un algorithme de hachage, qui a été déterminée en partant d'au moins l'identification de donneur de licence (9), de l'identification de preneur de licence (10) et de l'information de fichier (11).

11. Procédé selon l'une quelconque des revendications précédentes 1 à 7, **caractérisé en ce que** l'identification de licence (7) est une valeur de hachage calculée avec un algorithme de hachage, qui a été déterminée en partant d'au moins l'identification de donneur de licence (9), de l'identification de preneur de licence (10) et de l'information de fichier (11) cryptée.

12. Procédé selon l'une quelconque des revendications précédentes, **caractérisé en ce que** l'entrée de concession de licence (6) contient une information de restriction de licence (8) .

13. Procédé selon l'une quelconque des revendications précédentes, **caractérisé en ce que** le numéro de série d'utilisation (23) est crypté avec la clé de licence (13).

14. Procédé selon l'une quelconque des revendications précédentes, **caractérisé en ce que** le preneur de licence (5) ajoute pour chaque entrée d'utilisation de licence (25) en supplément une autre information de licence (26) à la base de données de transactions (18), dans lequel l'autre information de licence (26) contient une entrée de numéro de série de licence, qui contient au moins l'identification de preneur de licence (10) et le numéro de série d'utilisation (23) univoque non crypté.

15. Procédé selon l'une quelconque des revendications précédentes, **caractérisé en ce que** chaque nouveau bloc de transaction (17), qui contient une entrée de concession de licence (6) ou une entrée d'utilisation de licence (25), est ajouté à la base de données de transactions (18) à l'aide d'un module de logiciel exécuté sur un système de traitement de données, dans lequel il est vérifié de manière automatisée avec le module de logiciel si l'entrée de concession de licence (6) est déclenchée par le donneur de licence (1) ou si l'entrée d'utilisation de licence (25) est entraînée par le preneur de licence (5) et si l'entrée d'utilisation de licence (25) se rapporte à une entrée de concession de licence (6) précédente.

16. Procédé de validation automatisée d'un fichier de données d'utilisation (2) destiné à être utilisé dans un équipement de traitement de données, pouvant être raccordé au réseau, d'un dispositif d'utilisation, dans lequel une autorisation de validation pour une demande d'autorisation est dérivée d'une documentation électronique d'informations de licence, qui est gérée avec un procédé décrit dans les revendications 1 à 15 de documentation électronique d'informations de licence concernant une concession d'une licence et concernant une utilisation de ladite licence dans un réseau de plusieurs équipements de traitement de données électroniques pouvant être raccordés les uns aux autres avec transmission de données, dans lequel les informations de licence contiennent au moins une entrée de concession de licence (6),
- dans lequel lors d'une étape d'interrogation d'autorisation sont déterminées et lues en tant qu'informations d'autorisation dans la base de données de transactions (18) précisément les informations de licence, qui sont associées au fichier de données d'utilisation (2) à valider par l'intermédiaire de l'information de fichier (11) ou qui contiennent une identification de licence (7) enregistrée au préalable dans l'équipement de traitement de données du dispositif d'utilisation,
- et dans lequel lors d'une étape de contrôle d'autorisation qui suit, une validation d'autorisation est déterminée en ce qu'il est vérifié si la demande d'autorisation concerne une utilisation du fichier de données d'utilisation, qui n'est pas exclue par l'information de restriction d'utilisation ou a déjà été mise en œuvre à l'aide des informations d'utilisation de licence et est épuisée,
- et le fichier de données d'utilisation est validé pour une utilisation avec le dispositif d'utilisation si la validation d'autorisation est constatée.

17. Procédé selon la revendication 16, **caractérisé en ce qu'**est générée, avec le dispositif d'utilisation, avant, pendant ou après une utilisation de la licence du donneur de licence (1), une nouvelle information de licence avec une entrée d'utilisation de licence (25), qui est ajoutée à la base de données de transactions (18) dans un nouveau bloc de transaction (17) avec le procédé de génération de blocs, dans lequel l'entrée d'utilisation de licence (25) contient au moins l'identification de licence (7) de l'entrée de concession de licence (6) et une identification d'utilisation.

18. Procédé selon la revendication 16 ou la revendication 17, **caractérisé en ce qu'**est réalisé avec le dispositif d'utilisation un produit, qu'un numéro de série d'utilisation (23) univoque est généré avant ou pendant la fabrication du produit, que le produit est **caractérisé par** le numéro de série d'utilisation (23) et que le preneur de licence (5) ajoute une entrée d'utilisation de licence (25) et en supplément une autre information de licence (26) à la base de données de transactions (18), dans lequel l'autre information de licence (26) contient une entrée de numéro de série de licence, qui contient au moins l'identification de preneur de licence (10) et le numéro de série d'utilisation (23) univoque non crypté.
